# EUROPEAN PATENT APPLICATION

(11) **EP 1 526 374 A2**
(43) Date of publication of application: **27.04.2005**
(21) Application number: 04024959.1
(22) Date of filing: 20.10.2004
(51) Int. Cl.: G01N 21/86, G01N 21/47, G01N 33/573

(54) **Enzyme activity measuring apparatus and method, sample transfer apparatus and color measuring apparatus**

(30) Priority: 20.10.2003 JP 2003359911
(71) Applicant: YAMAHA HATSUDOKI KABUSHIKI KAISHA, Iwata-shi, Shizuoka 438-8501 (JP); Nipro Corporation, Osaka-shi, Osaka 531-8510 (JP); Toyama University, Toyama-shi, Toyama 930-8555 (JP)
(72) Inventor: Yamaguchi, Masaki, Toyama-shi Toyama 930-8555 (JP); Suzuki, Kazuhito, Iwata-shi, Shizuoka 438-8501 (JP); Higashi, Tomoyuki, Iwata-shi, Shizuoka 438-8501 (JP); Matsuda, Atsushi, Katsushika-ku, Tokyo 124-0023 (JP)
(74) Representative: Engelhard, Markus

(57) **Abstract**

An enzyme activity measuring apparatus comprises a reagent/sample disposing unit 5 which disposed a sample and a reagent containing member 13 including an enzyme activity measuring reagent at a distance from each other, a sample transcription unit 7 which brings the disposed reagent containing member 13 and the sample into contact with each other to transcribe a predetermined volume of sample to the reagent containing member 13, a color depth measuring unit 9 configured to measure color depth of a reagent included in the reagent containing member 13 when predetermined time is elapsed after the sample is transcribed, and CPU 101 configured to detect an activity of enzyme included in the sample based on the measured color depth.

## Description

### CROSS REFERENCE TO RELATED APPLICATIONS

This application is based upon and claims the benefit of priority from the prior Japanese Patent Applications No. P2003-359911, filed on October 20, 2003; the entire contents of which are incorporated herein by reference.

### BACKGROUND OF THE INVENTION

### Field of the Invention

The present invention relates to an enzyme activity measuring apparatus and an enzyme activity measuring method, a sample transcription apparatus and a color measuring apparatus used for measuring activity of enzyme. More particularly, the invention relates to an enzyme activity measuring apparatus and an enzyme activity measuring method, a sample transcription apparatus and a color measuring apparatus which measure activity of enzyme included in a sample by measuring color of on test paper which changes depending upon a transcribed sample.

### Description of the Related Art

It is known that it is possible to determine a degree of stress of a subject person or whether the subject person has illness by measuring activity of amylase (a kind of enzyme) included in saliva.

Since amylase is included not only in saliva but also in a sample such as blood, it is possible to measure the degree of stress of a subject person also bymeasuring activity of amylase included in blood. However, since it is usually painful to extract blood, it is not easy to extract blood as compared with saliva.

On the other hand, it is easy to extract saliva. However, the activity of amylase included in saliva is higher than activity of amylase included in blood. Therefore, if a reagent paper (reagent containing member) which measures the activity of amylase (amylase activity, hereinafter) is directly impregnated with saliva, the reaction of reagent included in the reagent paper immediately proceeds and completed. Thus, the reagent paper is also changed in color, and it becomes difficult to measure a difference of activity of amylase.

Thereupon, there is proposed a method for measuring the amylase activity included in saliva by holding a sample containing member such as nonwoven fabric impregnatedwith saliva (sample) and a reagent containing member such as a reagent paper using fingers. The saliva transcribed into the reagent containing member for predetermined time and depth of color ( color depth) of the reagent containing member to which the saliva is transcribed is detected (for example, Japanese Patent Application Laid-open No.2004-121214).

### SUMMARY OF THE INVENTION

However, the discoloration of the reagent paper is largely varied depending upon the volume of amylase (saliva), i.e. , the volume of saliva transcribed to the reagent paper including substrate that reacts with saliva, and time elapsed from the transcription. Especially, the color of the reagent paper is largely varied depending upon the difference of time elapsed from the transcription.

As described above, in the conventional technique, since the saliva is transcribed to the reagent paper by holding the reagent paper and the nonwoven fabric including saliva using user's fingers, there is a problem that the pushing force of the nonwoven fabric against the reagent paper is varied, and the volume of saliva transcribed to the test paper is not constant.

Further, in the conventional technique, after saliva is transcribed to the reagent paper, the reagent paper is inserted into the measuring apparatus and the color depth of the reagent paper is detected. However, there is a problem that time interval from the instant when the transcription of the saliva is started to the instant when the color of the reagent paper is measured is not constant.

That is, in the conventional technique, there is a problem that the amylase activity can not be measured precisely. This problem is also generated in enzyme other than amylase and in sample other than saliva.

The present invention has been accomplished in view of these problems, and it is an object of the present invention to provide an enzyme activity measuring apparatus, an enzyme activity measuring method, a sample transcription apparatus and a color measuring apparatus capable of more precisely measuring an activity of enzyme when the activity of enzyme is measured using an enzyme activity measuring reagent which measures activity of enzyme.

To solve the above problems, the present invention has the following features. According to a first aspect of the invention, an enzyme activity measuring apparatus (enzyme activity measuring apparatus 1 or enzyme activity measuring apparatus 200) comprises a reagent/sample disposing unit (reagent/sample disposing unit 5) configured to dispose a sample (for example, saliva) and a reagent containing member (reagent containing member 13) including an enzyme activity measuring reagent which measures an activity of an enzyme (for example, amylase) at a distance from each other, a sample transcription unit (sample transcription unit 7, sample transcription unit 230) configured to bring the sample and the reagent containing member disposedby the reagent/sample disposing unit into contact with each other, and to transcribe a predetermined volume of the sample to the reagent containing member, a color depth measuring unit (color depth measuring unit 9) configured to measure a color depth of reagent included in the reagent containing member when predetermined time is elapsed after the sample is transcribed, and an enzyme activity detector (CPU 101) configured to detect the activity of enzyme included in the sample based on the color depth measured by the color depth measuring unit.

According to a second aspect of the invention, in the first feature, the reagent containing member is a sheet member, the sample is included in a sample containing member (saliva extracting sheet 15) which is a sheet member, the reagent/sample disposing unit disposes a reagent containing member flat surface (flat surface portion 13A) which is a flat surface portion of the reagent containing member and a sample containing member flat surface (flat surface portion 15A) which is a flat surface portion of the sample containing member such that these flat surfaces are opposed to each other in substantially parallel to each other, the sample transcription unit brings the reagent containing member flat surface and the sample containing member flat surface into contact with each other for predetermined time under predetermined pressure.

According to a third aspect of the invention, in the second feature, the reagent/sample disposing unit disposes the reagent containing member and the sample containing member at a distance from each other using a holder (holder 17) which holds the reagent containing member and the sample containing member, the sample transcription unit pushes the holder to bring the reagent containing member flat surface and the sample containing member flat surface into contact with each other.

According to a fourth aspect of the invention, in the third feature, the enzyme activity measuring apparatus further comprises a cover (cover 3, cover 210) which covers the color depth measuring unit and which opens and closes around a turning shaft (hinge 3G, hinge 215), the sample transcription unit is provided on the cover.

According to a fifth aspect of the invention, in the fourth feature, the enzyme activity measuring apparatus further comprises a projecting member (hook 257) which moves in a direction substantially perpendicular to a pushing direction in which the sample transcription unit pushes the holder, the cover is provided with an insertion hole (insertion hole 210a) into which the projecting member is inserted in a state in which the cover is closed.

According to a sixth aspect of the invention, in the fifth feature, the projecting member is biased in an insertion direction into the insertion hole, the enzyme activity measuring apparatus further comprises a projecting member moving lever (lever 253) which is engaged with the projecting member and which moves the projecting member in a direction opposite from the insertion direction by turning the projectingmembermoving lever around the turning shaft (turning shaft 254), and a cover opening button portion (cover opening button 250 and push rod 252) which pushes the projecting member moving lever and which turns the projecting member moving lever when the cover opening button portion is pushed down.

According to a seventh aspect of the invention, in the fourth feature, the sample transcription unit comprises amovable member (movable member 237) which has a pushing surface (pushing surface 237pp) for pushing the holder and a cam abutment surface (cam abutment surface 237cp) which is opposed to the pushing surface, and which can move around the pushing direction in which the holder is pushed, a cam having a flat surface portion (flat surface portion 231p) on a portion of its outer peripheral surface in which a distance from the turning shaft (turning shaft 234) to the outer peripheral surface is longer than that of other portion, a transcription lever (transcription lever 232) which brings the flat surface portion into abutment against the cam abutment surface by turning the transcription lever into a first direction, a first biasing member (coil spring 233) configured to bias the cam such as to turn the cam in a second direction which is opposite from the first direction, and a second biasing member (coil spring 239) configured to bias the movable member toward the cam.

According to an eighth aspect of the invention, in the seventh feature, the enzyme activity measuring apparatus further comprises a third biasing member (coil spring 235) configured to bias the transcription lever such as to turn the transcription lever in the second direction.

According to a ninth aspect of the invention, in the first feature, the enzyme activity measuring apparatus further comprises a temperature detector (photodiode 26 and temperature detector 129) configured to detect a sample temperature which is a temperature of the sample, a sample temperature correcting data storing unit (storing unit 109) configured to store sample temperature correcting data in which the sample temperature and correcting rate for correcting the activity detected by the enzyme activity detector are associated with each other, and an activity correcting unit (CPU 101) configured to correct the activity based on the sample temperature and the sample temperature correcting data.

According to a tenth aspect of the invention, in the ninth feature, the enzyme activity measuring apparatus further comprises a heater (heater 260) configured to heat the sample to predetermined temperature, and a heater controller (CPU 101) configured to stop the operation of the heater when the temperature detector detects that the sample temperature reaches the predetermined temperature.

According to an eleventh aspect of the invention, in the first feature, the color depth measuring unit irradiates the reagent containing member flat surface with light substantially at right angles, the color depth is measured by measuring reflected intensity of light from the reagent containing member flat surface from a direction which is diagonal with respect to the reagent containing member flat surface.

According to a twelfth aspect of the invention, in the eleventh feature, the color depth measuring unit measures the reflected intensity of light by receiving the same through optical fiber (optical fiber 25).

According to a thirteenth aspect, in the first feature, the enzyme is amylase, and the sample is saliva.

According to a fourteenth aspect of the invention, an enzyme activity measuring method comprises a reagent/sample disposing step for disposing a sample and a reagent containing member including an enzyme activity measuring reagent which measures an activity of an enzyme at a distance from each other, a sample transcription step for bringing the sample and the reagent containing member disposed by the reagent/sample disposing unit into contact with each other, and for transcribing a predetermined volume of the sample to the reagent containing member, a color depth measuring step for measuring depth of color of reagent included in the reagent containing member when predetermined time is elapsed after the sample is transcribed, and an enzyme activity detecting step for detecting the activity of enzyme included in the sample based on the color depth measured by the color depth measuring unit, and in the reagent/sample disposing step, a reagent containing member flat surface which is a flat surface portion of the reagent containing member and a sample containing member flat surface which is a flat surface portion of the sample containing member are disposed such that these flat surfaces are opposed to each other in substantially parallel to each other, and in the sample transcription step, the reagent containing member flat surface and the sample containing member flat surface are brought into contact with each other for predetermined time under predetermined pressure.

According to a fifteenth aspect of the invention, a sample transcription apparatus comprises a reagent/sample disposing unit configured to dispose a sheet reagent containing member including enzyme activity measuring reagent which measures activity of enzyme and a sheet sample containing member including sample at a distance from each other, and a sample transcription unit which bring the reagent containing member and the sample disposed by the reagent/sample disposing unit and which transcribes a predetermined volume of sample to the reagent containing member, and the reagent/sample disposing unit disposes a reagent containing member flat surface which is a flat surface portion of the reagent containing member and a sample containing member flat surface which is a flat surface portion of the sample containing member such that these flat surfaces are opposed to each other in substantially parallel to each other, and the sample transcription unit brings the reagent containing member flat surface and the sample containing member flat surface into contact with each other for predetermined time under predetermined pressure.

According to a sixteenth aspect of the invention, a color measuring apparatus comprises a color depth measuring unit which irradiates a reagent containing member flat surface which is a flat surface portion of a sheet reagent containing member including an enzyme activity measuring reagent which measures activity of enzyme with light substantially at right angles, and which measures the light reflected from the reagent containing member flat surface from a direction which is diagonal with respect to the reagent containing member flat surface, thereby measuring the depth of color of the reagent containing member.

According to a seventeenth aspect of the invention, in the sixteenth feature, the color depth measuring unit measures the reflected intensity of light by receiving the same through optical fiber.

According to these aspects of the present invention, it is possible to provide an enzyme activity measuring apparatus, an enzyme activity measuring method, a sample transcription apparatus and a color measuring apparatus capable of more precisely measuring an activity of enzyme when the activity of enzyme is measured using an enzyme activity measuring reagent which measures activity of enzyme.

### BRIEF DESCRIPTION OF THE DRAWINGS

Fig. 1 is a perspective view showing an outline structure of an enzyme activity measuring apparatus according to a first embodiment of the present invention;
Fig. 2 is a perspective view of the enzyme activity measuring apparatus as viewed from the direction F2 shown in Fig. 1;
Fig. 3 is a sectional view taken along the direction F3-F3 shown in Fig. 2;
Fig. 4 is a sectional view taken along the direction F4 shown in Fig. 3;
Fig. 5 is a schematic sectional view of a color depth measuring unit of the enzyme activity measuring apparatus according to the first embodiment of the invention;
Fig. 6 is a graph showing the relation between a reaction degree of enzyme and elapsed time when a substrate and an amylase come into contact with each other;
Fig. 7 is a graph showing the relation between output voltage which is converted based on reflection light and elapsed time;
Fig. 8 is a graph showing the relation between color depth of a substrate and elapsed time when a substrate and an amylase come into contact with each other;
Fig. 9 is a block diagram of a CPU substrate provided in the enzyme activity measuring apparatus of the embodiment of the invention;
Fig. 10 is a block diagram of a sensor substrate provided in the enzyme activity measuring apparatus of the embodiment of the invention;
Fig. 11 is a flowchart showing the operation for measuring an amylase activity using the enzyme activity measuring apparatus;
Fig. 12 is a flowchart showing the operation for measuring the amylase activity using the enzyme activity measuring apparatus;
Fig. 13 is a flowchart showing the operation for measuring the amylase activity using the enzyme activity measuring apparatus;
Fig. 14 is a perspective view of an enzyme activity measuring apparatus according to a second embodiment of the invention;
Fig. 15 is a plan view of the enzyme activity measuring apparatus of the second embodiment of the invention;
Fig. 16 is a plan view (cover is opened) of the enzyme activity measuring apparatus of the second embodiment of the invention;
Fig. 17 is a sectional view taken along the direction F17-F17 shown in Fig. 15;
Fig. 18 is an explanatory view for explaining the operation of a cover opening/closing mechanism provided in the enzyme activity measuring apparatus of the second embodiment of the invention;
Fig. 19 is a side view of a sample transcription unit as viewed from the direction F19 shown in Fig. 15;
Fig. 20 is an explanatory view for explaining the operation of the sample transcription unit provided in the enzyme activity measuring apparatus according to the second embodiment of the invention;
Fig. 21 is a schematic block diagram of a color depth measuring unit provided in the enzyme activity measuring apparatus according to the second embodiment of the invention;
Fig. 22A is a graph showing the relation (temperature characteristics) between a sample temperature and an activity rate of amylase included in the sample;
Fig. 22B is a graph showing a correcting curve of the sample temperature determined based on the temperature characteristics;
Fig. 23 is a flowchart showing a portion of operation carried out in the enzyme activity measuring apparatus according to the second embodiment of the invention; and
Fig. 24 is a schematic block diagram of a base and a heater according to the second embodiment of the invention.

### DESCRIPTION OF THE PREFFERED EMBODIMENTS

### First Embodiment

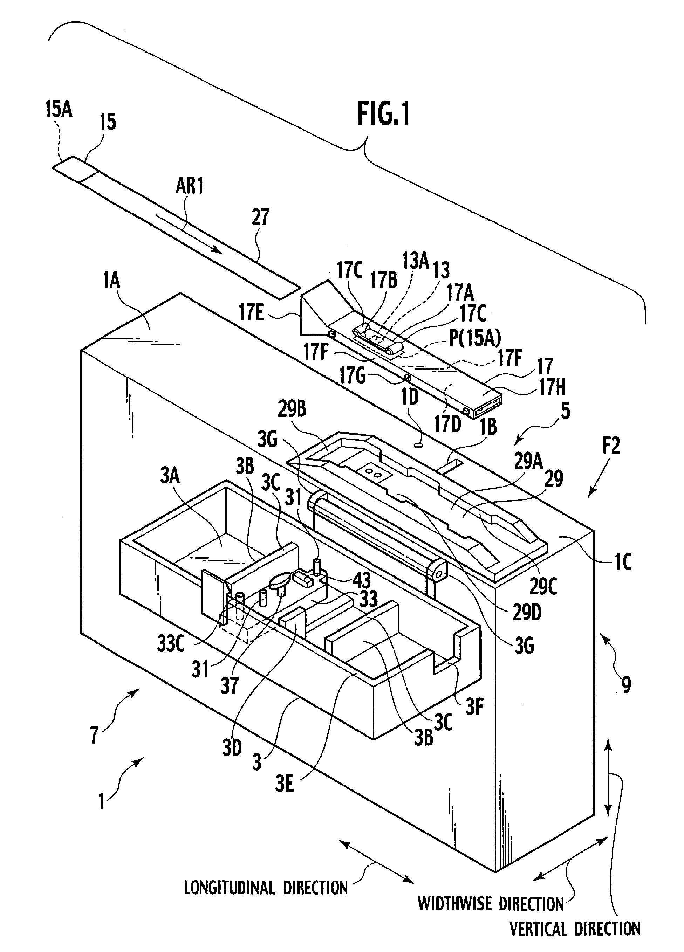

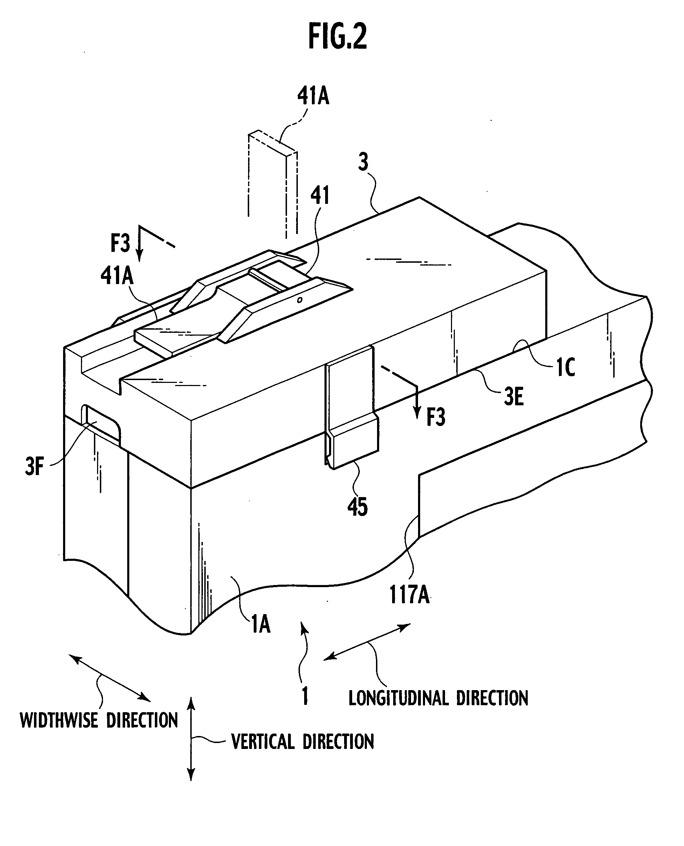

A first embodiment of an enzyme activity measuring apparatus according to the present invention will be explained. Fig.1 is a schematic perspective view of a structure of the enzyme activity measuring apparatus 1 of the first embodiment of the invention. Fig. 2 is a perspective view of the enzyme activity measuring apparatus 1 as viewed from a direction F2 shown in Fig. 1.

In Fig. 1, a cover 3 is opened. In Fig. 2, the cover 3 is closed.

The enzyme activity measuring apparatus 1 measures activity using an enzyme activity measuring reagent. The following explanation, saliva (human's saliva) is used as an example of a sample and amylase is used as an example of enzyme, but the present invention is not limited to saliva and amylase.

The enzyme activity measuring apparatus 1 includes a reagent/sample disposing unit 5. The reagent/sample disposing unit 5 disposes a reagent containing member 13 including an amylase activity measuring reagent which is one of enzyme activity measuring reagents and a saliva extracting sheet 15 including saliva at a distance from each other.

The enzyme activity measuring apparatus 1 includes a sample transcription unit 7. The sample transcription unit 7 brings the disposed reagent containing member 13 and saliva (saliva extracting sheet 15) into contact with each other to transcribe a predetermined volume of saliva to the reagent containing member 13.

The enzyme activity measuring apparatus 1 also includes a color depth measuring unit 9 which measures depth of color of the reagent included in the reagent containing member 13 when predetermined time is elapsed after the saliva is transcribed. The activity of the detected amylase is displayed on a LCD panel 117A (see Fig. 2).

Here, amylase will be explained. As a typical amylase, there is α-amylase is secreted from human's salivary gland or pancreatic gland. The amylase is digestive enzyme having molecular weight of 54,000 to 62,000 which is hydrolytic degradation polysaccharide such as starch and amylase.

It is known that the amylase activity in saliva is largely varied depending upon physical condition or individuals. A normal activity is about tens of thousands, but the activity may exceed hundreds of thousands depending upon physical condition or physical predisposition, or even in a healthy person in some cases.

As the substrate of the reagent for measuring the amylase activity used in this embodiment, modified oligosaccharide is used. The term "modified" means that a compound for labeling is bound to an end, reducing end of oligosaccharide, and the end can be liberated by amylase or conjugated enzyme. The number of sugar of the modified oligosaccharide is in a range of G2 to G7, and preferably in a range of G2 to G5.

As the compound for labeling, chromogenic compound can generally be used. As preferable groups are 4-nitrophenol (PNP) , 2-chloro-4-nitrophenol (CNP) and 2, 4-dichlorophenol (C12P).

Concrete examples of modified oligosaccharide which is modified with chromagenic are 2-chloro-4-nitrophenol -4-O-β-D-Galacto pyranose sylmalto side (GAL-G2-CNP, hereinafter), GAL-G-4-CNP, GAL-G5-CNP, G5-CNP(2-chloro-4-nitrophenyl maltopentaose), G7-CNP, G5-PNP(p-nitrophenyl maltopentaose), G6-CNP(2-chloro-p-nitrophenyl maltotetraose) and G7-PNP.

Among these modified oligosaccharide, preferable examples are GAL2-G2-CNP and GAL-G4-CNP in which the number of cut portions generated when hydrolysis is carried out by amylase is limited to one. Such modified oligosaccharide can be expressed using general formula as shown below.

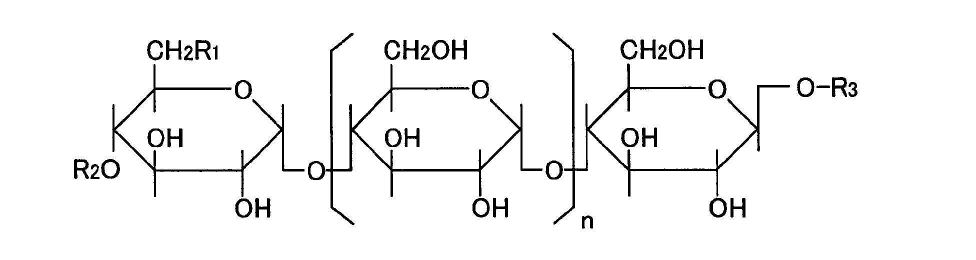

In the formula, R1 and R2 means hydrogen atoms or protective groups. The protective group is not especially limited, but examples thereof are non-substituted or substituted low grade alkyl, low grade alkoxyl or phenyl, azido group, halide atom, N-monoalkyl monoalkyl carbamoyl oxy group , alkyl or aryl sulf onyl oxy group or alkyl oxy group, α-glucosyl, α-maltosyl and β-galaxytol. Further, R1 and R2 may be cross linked with each other, or the cross-link group may further have substituent.

In the formula, R3 means a signal generating group, for example, group capable of optically detecting a signal (preferably, color forming aromatic group), and n is in a range of 0 to 5. In the above formula, -OR3 means that β- is bound to a portion of a reducing end glucose, but α- may be bound to the portion.

In the amylase activity measuring reagent (reagent containing member 13) of this embodiment, a substrate is carried on a support body (reagent paper such as filter paper).

Here, the expression "carried on support body" means that substrate and competitive enzyme inhibiting agent are fixed to or trapped in water-insoluble organic or inorganic carrier. It is preferable that the support body is in a form of a thin film, and a thickness of the support body is in a range of 100µm to 500µm, preferably in a range of 150µm to 400µm.

It is preferable that the thin film is white in color. Preferable materials of the thin film are nitrocellulose, porous glass or paper, but the material is not limited to them, and any material may be used only if it can efficiently carry the substrate. In this embodiment, even if a reagent is carried on a support body other than paper (such as nitrocellulose), it is called "reagent paper" but "reagent paper" also includes other material other than paper.

It is preferable that the amount of modified oligosaccharide carried on the support body is adjusted to a constant value. As a simple method, there is a method in which support body is immerse into solution including 2 to 500 mmol/L of modified oligosaccharide substrate for about 1 to 5 minutes, and the support body is dried.

In measurement of amylase activity in this embodiment, the amylase activity is determined based on change in absorbance by means of disengagement of chromagenic such as CNP and PNP which are modified materials of substrate or by color forming of reagent support body. For example, CNP is measured by absorbance of 405 nm.

Usually, the chromogenic can be liberated only by action of largely excessive amylase. If necessary, there is used a conjugated enzyme method including reaction for liberating the chromagenic by amylase, α-glucosidase, β-glucosidase and the like after hydrolytic reaction of amylase. In this case, it is necessary to introduce means for adding the additional enzyme as a reagent. To facilitate the reaction, known activator of α-amylase may be used.

The reaction temperature in this measurement is not especially limited, but preferable temperature is in a range of 25 to 40°C. The reaction time is 1 to 10 minutes, but the time is varied depends on kinds of substrate and conjugated enzyme.

To measure the change caused by color forming, later-described LED 21, photodiode 23 and the like are used. The change of absorbance caused by color forming of support body can be measured by reflected intensity of light or trans illumination.

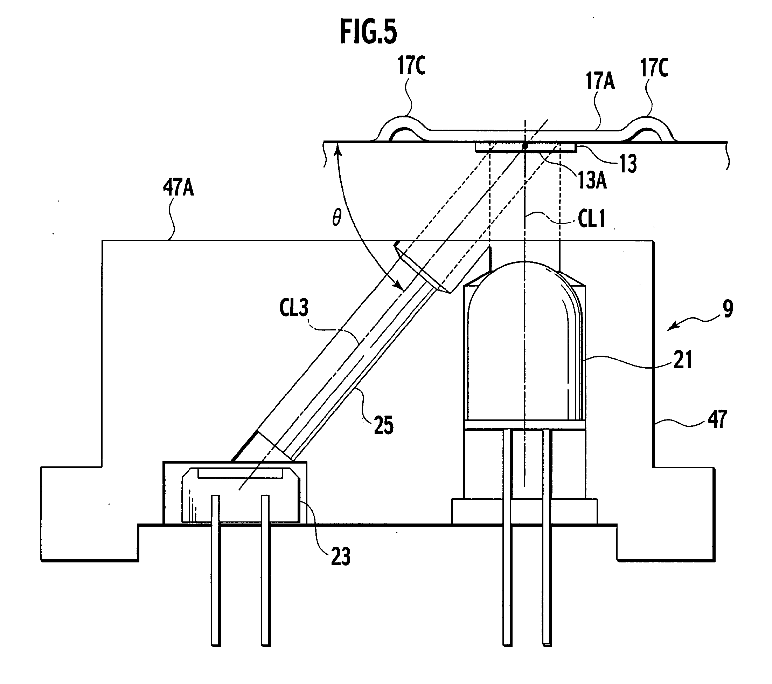

As a light source for measurement, it is possible to use laser, a halogen lamp, tungsten lamp and the like in addition to the light-emitting diode (LED 21 shown in Fig. 5). The light source is not limited to them.

The reagent containing member 13 is a sheet member. The saliva extracting sheet 15 is also made of sheet member (for example, nonwoven fabric).

The reagent/sample disposing unit 5 disposes aflat surface portion 13A (reagent containing member flat surface) which is a flat surface portion of the reagent containing member 13 and a flat surface portion 15A (sample containing member flat surface) which is a flat surface portion of the saliva extracting sheet 15 including saliva such that both the flat surface portions are opposed to each other substantially in parallel to each other.

The reagent/sample disposing unit 5 disposes the reagent containing member 13 and the saliva extracting sheet 15 including sample using a holder 17. The holder 17 holds the reagent containing member 13 and the saliva extracting sheet 15 including sample (saliva).

The sample transcription unit 7 brings the flat surface portion 13A of the reagent containing member 13 and the flat surface portion 15A of the saliva extracting sheet 15 into contact with each other for predetermined time under predetermined pressure.

Specifically, the sample transcription unit 7 pushes the holder 17 by means of a later-described cam 41, and brings the flat surface portion 13A and the flat surface portion 15A into contact with each other. More specifically, the sample transcription unit 7 deforms the reagent holding portion 17A which holds the reagent containing member 13 and a portion in the vicinity of the reagent holding portion 17A by predetermined amount, and brings the flat surface portion 13A and the flat surface portion 15A into contact with each other.

Instead of the reagent holding portion 17A which holds the reagent containing member 13 and the portion in the vicinity of the reagent holding portion 17A, a portion where the saliva extracting sheet 15 is held and a portion in the vicinity of this portion may be deformed. That is, at least one of the reagent holding portion 17A where the reagent containing member 13 is held and a portion (including a portion in the vicinity thereof) where the saliva extracting sheet 15 is held may be deformed by a predetermined amount, and the flat surface portion 13A and the flat surface portion 15A may be brought into contact with each other.

As described above, the color depth measuring unit 9 measures the depth of color of reagent included in the reagent containing member 13.

More specifically, as shown in Fig. 5, the color depth measuring unit 9 irradiates the flat surface portion 13A with light substantially at right angles by means of the LED 21, the color depth measuring unit 9 measures the light reflected from the flat surface portion 13A from a direction diagonal with respect to the flat surface portion 13A using the photodiode 23 (PD 23, hereinafter), thereby measuring the depth of color of the reagent containing member 13 (flat surface portion 13A).

The PD 23 receives reflection light from the flat surface portion 13A through an optical fiber 25. The enzyme activity measuring apparatus 1 includes a cover 3 which restrains disturbance light from entering into the color depth measuring unit 9. If the cover 3 is closed, the holder 17 is fixed to a base 29.

The sample transcription unit 7 is provided on the cover 3. If the cover 3 is closed, a reagent holding portion 17A of the holder 17 is deformed so that the flat surface portion 13A and the flat surface portion 15A can be brought into contact with each other.

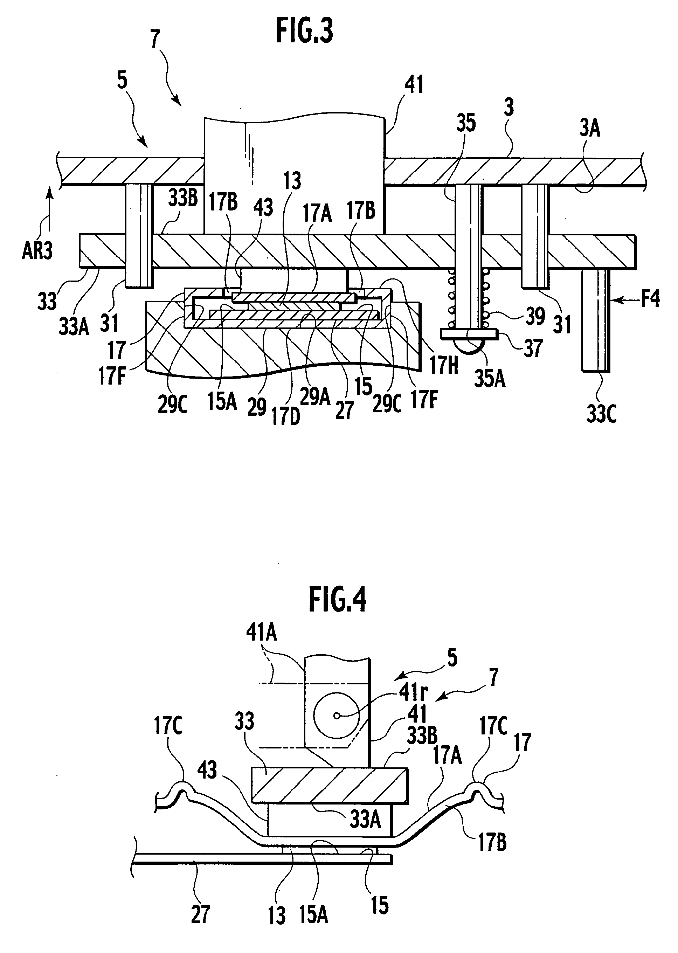

The reagent/sample disposing unit 5 and the sample transcription unit 7 will be explained in detail. Fig. 3 is a sectional view taken along the direction F3-F3 shown in Fig. 2. In Fig. 3, the reagent containing member 13 and the saliva extracting sheet 15 are disposed by the reagent/sample disposing unit 5. Fig. 3 shows that the reagent containing member 13 and the saliva extracting sheet 15 are in contact with each other by means of the sample transcription unit 7.

Fig. 4 is a sectional view taken along the direction F4 shown in Fig. 3. Fig. 4 shows a portion of each of the reagent containing member 13, the reagent holding portion 17A holding the reagent containing member 13, the saliva extracting sheet 15 and the sample transcription unit 7 so that the invention can be understood easily. The reagent holding portion 17A is provided on the side of the inner surface side of the holder 17.

As shown in Fig. 1, the saliva extracting sheet 15 is provided on one surface of one end of a long plate-like base material 27 (for example, white synthetic resin). The holder 17 is of rectangular solid shape, and the base material 27 can be inserted into the holder 17.

The reagent holding portion 17A where the reagent containing member 13 is held is located on the upper surface of the holder 17. The reagent holding portion 17A functions as a leaf spring by a notch 17B extending substantially in parallel to a longitudinal direction of the holder 17.

As shown in Fig. 4, arc portions 17C is formed at opposite ends in longitudinal direction of the reagent holding portion 17A so that the reagent holding portion 17A can easily be bent.

If the base material 27 provided with the saliva extracting sheet 15 is inserted into the holder 17 from the direction of AR1 (see Fig. 1) and the holder 17 is set to the base 29 such that the saliva extracting sheet 15 is located at the position P shown with broken line, the reagent containing member 13 (flat surface portion 13A) and the saliva extracting sheet 15 (flat surface portion 15A) are disposed at a distance from each other.

The base 29 is provided on the upper surface of the enzyme activity measuring apparatus 1, extends in the longitudinal direction of the enzyme activity measuring apparatus 1 and has a groove shape. A casing 1A of the enzyme activity measuring apparatus 1 including the base 29 is made of black synthetic resin.

When the holder 17 is set on the base 29, a bottom surface 17D of the holder 17 opposed to the reagent holding portion 17A and a bottom surface 29A of the base 29 come into contact with each other in a surface-to-surface manner. Further, an end surface 17E of the holder 17 and an end surface 29B of the base 29 come into contact with each other in a surface-to-surface manner, and a side surface 17F of the holder 17 and a side surface 29C of the base 29 come into contact with each other in a surface-to-surface manner.

A projection 17G provided on the side surface of the holder 17 and a notch 29D provided in the side surface 29C of the base 29 come into contact with each other. Since the holder 17 is set on the base 29 in this manner, the holder 17 can move only in a direction other than upper direction of the enzyme activity measuring apparatus 1.

Since an upper surface, a lower surface and side surfaces of the holder 17 have different shapes, it is possible to easily and precisely set the holder 17 on the base 29. Further, the holder 17 can be set on the base 29 only in the correct direction, and operation mistake of a user can be prevented.

Next, the sample transcription unit 7 will be explained. As shown in Fig. 3, the sample transcription unit 7 includes a plate-like movable portion 33. The movable portion 33 engages with a columnar guide portion 31 which vertically stands on the inner surface 3A of the box-like cover 3. The movable portion 33 moves toward and away from the inner surface 3A. Flat surface portions 33A and 33B and an inner surface 3A of the inner surface 3A are substantially in parallel to one another. In this embodiment, the cover 3 and the movable portion 33 are made of black synthetic resin.

The inner surface 3A is provided with a columnar guide portion 35 which vertically stands on the inner surface 3A. The guide portion 35 is provided at its tip end 35A with a spring holding portion 37 having an outer diameter greater than that of the guide portion 35.

A coil spring 39 is provided between the spring holding portion 37 and the movable portion 33. That is, the movable portion 33 is biased toward the inner surface 3A by the coil spring 39.

A cam 41 abuts against the flat surface portion 33B (inner surface 3A), and the movable portion 33 moves in response to the turning motion of the cam 41. The cam 41 can turn around a turning shaft 41r, and one end of the cam 41 is provided with a transcription lever 41A through which a user can turn the cam 41.

Figs. 3 and 4 show the reagent containing member 13 and the saliva extracting sheet 15 which are in contact with each other. In Fig. 4, as shown with phantom lines (a state as shown with phantom lines in Fig. 2 and to a state shown with solid line in Fig. 2), if the cam 41 is turned, the movable portion 33 moves in the direction of AR3 (see Fig. 3), i.e. , toward the inner surface 3A by the coil spring 39, and the reagent containing member 13 and the saliva extracting sheet 15 are separated from each other.

The cam 41 is manually operated by the user of the enzyme activity measuring apparatus 1. Instead of the cam 41, a solenoid which pushes the holder 17 may be operated under control of a later-described CPU 101. In a state in which the reagent containing member 13 and the saliva extracting sheet 15 are in contact with each other by the cam 41, the position of the cam 41 is held, and the cam 41 is not turned unintentionally.

The flat surface portion 33A of the movable portion 33 is provided with a rectangular solid transcription pad 43 (pushing member) which pushes the reagent holding portion 17A. The transcription pad 43 is made of hard member such as metal.

The cover 3 turns around a hinge 3G (turning shaft, see Fig. 1). As shown in Fig. 2, the cover 3 can be closed by turning the cover 3 around the hinge 3G. If the cover 3 is closed, the cover 3 can be fixed using a hook 45 so that the cover 3 is not opened.

If the transcription lever 41A is turned to move the movable portion 33 toward the holder 17, the reagent holding portion 17A is pushed by the transcription pad 43 and deformed, and the reagent containing member 13 and the saliva extracting sheet 15 are brought into contact with each other under predetermined pressure.

As shown in Fig. 1, the inner surface 3A is provided with a rib 3B. If the cover 3 is closed, an end surface 3C of the rib 3B comes into contact with an upper portion 17H of the holder 17 and slightly biases the upper portion 17H. Thus, the holder 17 is fixed such that the holder 17 can not move upward.

The inner surface 3A is provided with a projection 3D. If the cover 3 is closed, the projection 3D is inserted into a hole 1B formed in the casing 1A.

The projection 3D inserted into the hole 1B operates a limit switch (not shown) provided in the casing 1A, and the closed state of the cover 3 is detected.

As described above, if the cover 3 is closed, light toward the base 29 is blocked. If the cover 3 is closed, an end surface 3E around the opening of the cover 3 and a flat surface portion 1C around the base 29 come into contact with each other. A bottom surface 29A (concretely, upper surface 47A of the substrate 47 provided with the PD 23, see Fig. 5) is located higher than the position of the contacted portion in the vertical direction.

This is because that adverse influence on the measurement using the disturbance light is prevented. That is, the disturbance light (sunlight or electric light) pours from downward from above. Thus, as described above, if the bottom surface 29A is disposed higher than the contacted portion, the adverse influence on the measurement using the disturbance light can be prevented.

The movable portion 33 is provided with a projection 33C. If the cover 3 is closed, the projection 33C is inserted into a hole 1D formed in the casing 1A.

If the movable portion 33 is moved into a state in which the movable portion 33 pushes the holder 17 (states shown in Figs. 3 and 4), a limit switch (not shown) provided in the casing 1A is operated, and the transcription of the saliva to the reagent containing member 13 is detected.

According to the sample transcription unit 7, since the movable portion 33 and the transcription pad 43 move in parallel to each other, uniform load can be applied to the holder 17. Thus, uniform transcription of saliva can be realized. Since the transcription lever 41A is used, it is possible to prevent excessive load from being applied to the holder 17.

Since the cover 3 is provided with the sample transcription unit 7, the enzyme activity measuring apparatus 1 can be reduced in size. A darkroom can easily be formed by the cover 3, and the disturbance light which causes an adverse influence on the measurement can effectively blocked.

When change of color of the reagent containing member 13 is to be measured, it is necessary to precisely manage the time during which the reagent containing member 13 and the saliva extracting sheet 15 are brought into contact with each other. According to the sample transcription unit 7, since the limit switch which is operated in accordance with operation of the movable portion 33 is provided, the time during which the reagent containing member 13 and the saliva extracting sheet 15 are brought into contact with each other, i.e., the transcription time of saliva can precisely detected.

Since the transcription pad 43 is made of hard member such as metal, it is possible to prevent the transcription pad 43 from being worn. Since the transcription pad 43 is made of different member from that of the movable portion 33, various specification changes such as shape, material and hardness of the transcription pad 43 can easily be accepted.

Since the saliva can be transcribed only by turning the transcription lever 41A, the saliva can easily and reliably be transcribed as compared with the conventional technique.

Next, the color depth measuring unit 9 will be explained in detail. Fig. 5 is a schematic sectional view of the color depth measuring unit 9.

As described above, the color depth measuring unit 9 measures the depth of color of the flat surface portion 13A of the reagent containing member 13.

The color depth measuring unit 9 measures the depth of color of the reagent containing member 13 (flat surface portion 13A) when predetermined time is elapsed after the sample transcription unit 7 starts transcription of the saliva.

When the depth of color is to be measured by the color depth measuring unit 9, the base material 27 is removed from the holder 17. That is, nothing is interposed between the LED 21 (optical fiber 25) and the reagent containing member 13 (flat surface portion 13A) . Also, nothing is interposed between the PD 23 and the reagent containing member 13 (flat surface portion 13A). As shown in Fig. 2, even if the cover 3 is closed, the base material 27 can be removed through a notch portion 3F provided in the cover 3.

The LED 21, the PD 23 and the optical fiber 25 are provided on the substrate 47 made of black synthetic resin. The upper surface 47A of the substrate 47 is located substantially at the same height as the bottom surface 29A of the base 29. The upper surface 47A and the flat surface portion 13A are disposed substantially in parallel to each other.

A straight line CL1 connecting the LED 21 and a center of the flat surface portion 13A forms a right angle with respect to the flat surface portion 13A. A straight line CL3 connecting the PD 23 and the center of the flat surface portion 13A is inclined with respect to the flat surface portion 13A.

When light reflected from the flat surface portion 13A is measured by the PD 23, an angle formed between the flat surface portion 13A and a color forming portion (flat surface portion 13A) of the reagent containing member 13 (test paper) is 0 to 50°, preferably 10 to 45°, and more preferably 10 to 30°.

A distance between the flat surface portion 13A and the PD 23 is 10 to 30 mm, preferably 15 to 25 mm, and more preferably 18 to 22 mm. A spot diameter of reagent (diameter of portion irradiated with light) is 1 to 5 mm, preferably 2 to 4 mm, and more preferably 2.5 to 3.5 mm.

Although the depth of color of the reagent containing member 13 is measured in the color depth measuring unit 9, if a degree of reaction of reagent included in the reagent containing member 13 (color depth of reagent) can be detected, another method may be used.

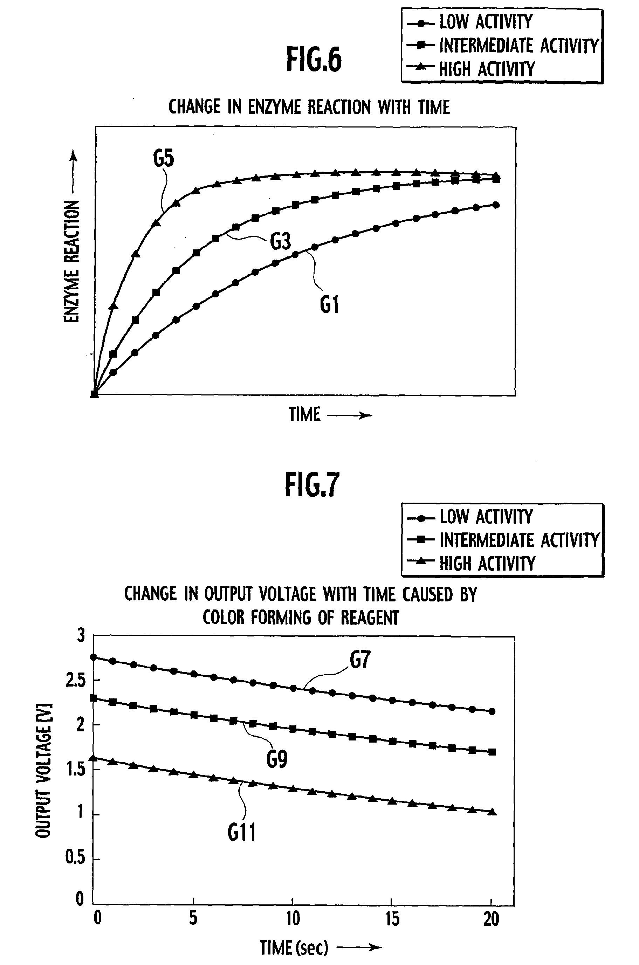

Next, decomposition of substrate of reagent by amylase will be explained. Fig. 6 is a graph showing the relation between the enzyme reaction degree and elapsed time when the substrate and amylase come into contact with each other. Here, graph G1 shown in Fig. 6 shows a case in which the activity of amylase is low, graph G3 shows a case in which the activity of amylase is intermediate degree, and graph G5 shows a case in which the activity of amylase is high.

As shown in Fig. 6, as the activity of amylase is higher, the enzyme reaction proceeds faster. The enzyme reaction is carried out until the substrate is decomposed and disappears. As the enzyme reaction proceeds, the reagent containing member 13 colors such that yellow is deep.

Fig. 7 is a graph showing the relation between elapsed time and output voltage converted based on the reflection light detected by the PD 23. In Fig. 7, the graph G7 shows a case in which the activity of amylase is low, graph G9 shows a case in which the activity of amylase is intermediate degree, and graph G11 shows a case in which the activity of amylase is high.

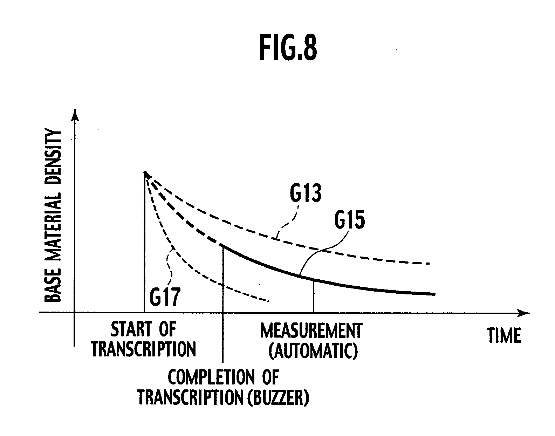

Fig. 8 is a graph showing the relation between the elapsed time and density of substrate when the substrate and amylase come into contact with each other. In Fig. 8, the graph G13 shows a case in which the activity of amylase is low, graph G15 shows a case in which the activity of amylase is intermediate degree, and graph G17 shows a case in which the activity of amylase is high.

As shown in Fig. 8, as the activity of amylase is higher, reaction of more enzymes occurs in short time, and the density of substrate is lowered.

As described above, the enzyme reaction (decomposition reaction of substrate by amylase) is started from the instant when the saliva extracting sheet 15 including saliva and the reagent containing member 13 (test paper) come into contact with each other. Also while the saliva is immersed from the saliva extracting sheet 15 into the entire reagent containing member 13 (test paper), the reaction proceeds at the contact surface portion. The instant when the enzyme reaction is started is a reference for measuring the depth of color of the reagent containing member 13. Thus, it is possible to precisely detect this instant as described above.

The time required for transcribing the saliva may be time during which saliva can be impregnated into the entire reagent containing member 13 (test paper). However, if the transcription is continued more than necessary, the melted substrate is reversely transcribed to the saliva extracting sheet 15 and this causes error in measurement. Thus, it is preferable complete the transcription at appropriate time.

The transcription of saliva is completed by turning the transcription lever 41A from the position shown with phantom line to the position shown with solid line (see Fig. 2). In other words, the transcription of the saliva is completed by a simple operation, i.e., by returning the transcription lever 41A.

By returning the transcription lever 41A, the flat surface portion 13A and the flat surface portion 15A are separated from each other, and the transcription of the saliva is completed.

A user manually returns the transcription lever 41A, but the user is informed of the returning timing of the transcription lever 41A by allowing a buzzer on the enzyme activity measuring apparatus 1 to sound. The timing of allowing the buzzer to sound is set to the instant when predetermined time (for example, 10 seconds) is elapsed after the limit switch is operated by the projection 33C.

If the transcription of saliva is completed, the user removes the base material 27 from the enzyme activity measuring apparatus 1, and measurement by the color depth measuring unit 9 is carried out without delay.

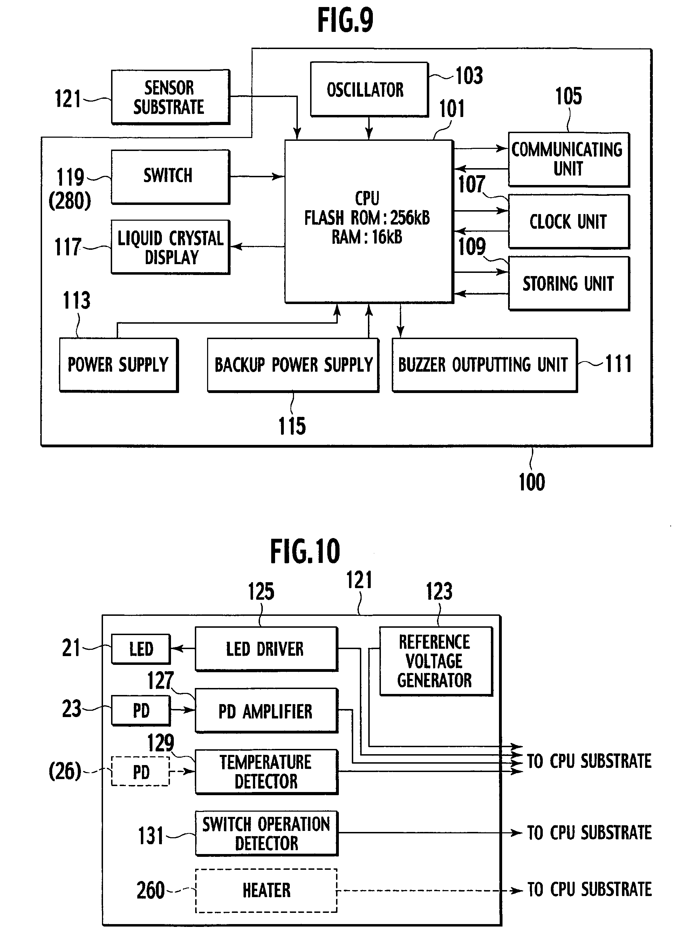

It is necessary to measure the amylase activity before the reaction of enzyme is completed as described above. The measurement value is varied depending upon time elapsed after the enzyme reaction is started. Thus, time elapsed after the transcription of saliva is started is measured by a real time clock IC (CPU 101 shown in Fig. 9), and if the preset time is elapsed, the measurement is carried out automatically.

According to the enzyme activity measuring apparatus 1 of this embodiment explained above, the following working effect can be obtained.

The transcription operation and the transcription-releasing operation which do not require high precision are carried out manually. Thus, the number of parts of the sample transcription unit 7 can be reduced, and its structure can be simplified.

Since the CPU 101 measures the transcription time of saliva, it is possible to precisely manage the time elapsed after the trnasfer of saliva is started. When the predetermined time is elapsed, since the buzzer sounds, it is possible to prevent the transcription of saliva frombeing continuedmore than necessary .

Next, color forming of reagent included in the reagent containing member 13 will be explained in detail. The color forming of reagent means incensement of depth of color forming material, but it is difficult to quantitatively grasp the degree of color forming by the unaided eye.

Thereupon, the color forming degree is grasped quantitatively, the LED 21 irradiates the reagent containing member 13 (test paper) with light having wavelength in accordance with the wavelength of formed color, and the luminance of reflection light or scattered light of the irradiated light is measured by the PD 23.

As described above, all of the LED 21, PD 23 and optical fiber 25 are mounted on the substrate 47. In this embodiment, a diode having a peak wavelength of 430nm is used as the LED 21, and a photodiode having sensitivity at wavelength of 430 to 450nm is used as the PD 23.

A single core type sensor optical fiber is used as the optical fiber 25. The bottom surface 29A of the base 29 and the substrate 47 are colored with matte black.

Light irradiated from the LED 21 is reduced in diameter to a predetermined spot diameter by a diaphragm (not shown), and the diameter-reduced light is emitted to the reagent containing member 13 (flat surface portion 13A). The emitted light passes through, is scattered or is reflected, and a portion of the light reaches the PD 23 through the optical fiber 25. The PD 23 outputs voltage in accordance with the illumination of the light which reached through the optical fiber 25 (concretely, voltage value converted based on current value which is output from the PD 23) as shown in Fig. 7.

Since the bottom surface 29A and the substrate 47 are colored with matte black, light leaked from the LED 21 or entering light is prevented from being reflected irregularly. By setting the spot diameter to the size of the reagent containing member 13 (flat surface portion 13A), it is possible to prevent the light from being emitted to the direction other than the flat surface portion 13A, and to reduce the irregular reflection which may cause error.

It is possible to uniformly irradiate the flat surface portion 13A with light by throwing the light emitted from the LED 21 out of focus, and it is possible to stably measure the color depth of the flat surface portion 13A (reagent).

The absorbance of the color forming reagent is varied most remarkably in the wavelength band region of 420 to 450nm. Thus, if LED 21 suitable of this wavelength is used, it is possible to detect the color depth of reagent which emits color with excellent sensitivity.

By using the PD 23 having sensitivity at 430 to 450nm, it is possible to reduce the influence on excessive disturbance light, and to obtain output voltage having excellent S/N ratio.

Since the optical fiber 25 is used, it is possible to suppress the attenuation of reflection light, and illumination can be detected with high sensitivity. Since the reagent containing member 13 and the PD 23 are not in the same atmosphere (i.e. , they are separated from each other), it is possible to reduce the influence of moisture (moisture caused by saliva) with respect to an interference filter (not shown) of the PD 23.

Since the LED 21 and the PD 23 are mounted on the same surface of the substrate 47, it is possible to efficiently assemble the substrate 47 (color depth measuring unit 9).

Next, operation for displaying a result of measurement of the amylase activity will be explained. The illumination of light measured by the color depth measuring unit 9 is output as a current value of the PD 23. Thus, it is necessary to convert the current value into an amylase activity.

An electronic circuit substrate mounted on the enzyme activity measuring apparatus 1 has a function for storing a calibration curve and for converting the same into an activity of the amylase or into a target index.

The electronic circuit substrate also has a function for guiding the measuring procedure and a function as a real time clock.

Fig. 9 is a block diagram of a CPU substrate 100. Fig. 10 is a block diagram of a sensor substrate 121. The CPU 101 includes a 256kB flush ROM therein so that a program can be rewritten. An oscillator 103 supplies a clock signal to the CPU 101. In this embodiment, the CPU 101 constitutes an enzyme activity detector which detects an amylase activity included in saliva.

A communicating unit 105 comprises an RS232C driver, and is used for outputting measurement data and for downloading a rewritable program. A clock unit 107 comprises a real time clock IC and produces a precise timing signal.

A storing unit 109 can store data concerning the measurement time and measurement result, and can output the data in response to request. A buzzer outputting unit 111 is a circuit which outputs sound when an error is generated and when it is necessary to encourage a user to carry out operation (for example, operation for completing the transcription of saliva).

A power supply 113 converts voltage of a battery mounted in the casing 1A to required voltage, and comprises a circuit which supplies to the CPU 101. A backup power supply 115 is used to back up data stored in the storing unit 109 and the clock unit 107.

A liquid crystal display 117 displays thereon the operation menu, operation guidance, measurement result and the like. A switch 119 comprises a power supply switch, a cursor switch and a circuit which detects the operation of the switch.

As shown in Fig. 10, a sensor substrate 121 comprises a reference voltage generator 123 which produces reference voltage used for A-D conversion, an LED driver 125 for supplying constant current to the LED 21, a PD amplifier 127 which converts the current value supplied from the PD 23 into a voltage value and amplifies the same, and a temperature detector 129.

The sensor substrate 121 is provided with a switch operation detector 131 which detects the operation of a cover switch (limit switch operated by the projection 3D) and the operation of a transcription-starting switch (limit switch operated by the projection 33C).

Next, the operation for measuring the amylase activity using the enzyme activity measuring apparatus 1 will be explained.

As described above, the enzyme activity measuring apparatus 1 disposed the reagent containing member 13 and the saliva extracting sheet 15 including the saliva at a distance from each other. Next, the enzyme activity measuring apparatus 1 brings the reagent containing member 13 and the saliva extracting sheet 15 into contact with each other, and allows the reagent containing member 13 to transcribe a predetermined volume of saliva.

The enzyme activity measuring apparatus 1 measures color depth of the reagent in the reagent containing member 13 when predetermined time is elapsed after the transcription of saliva is started, and calculates the amylase activity included in saliva based on the measured color depth.

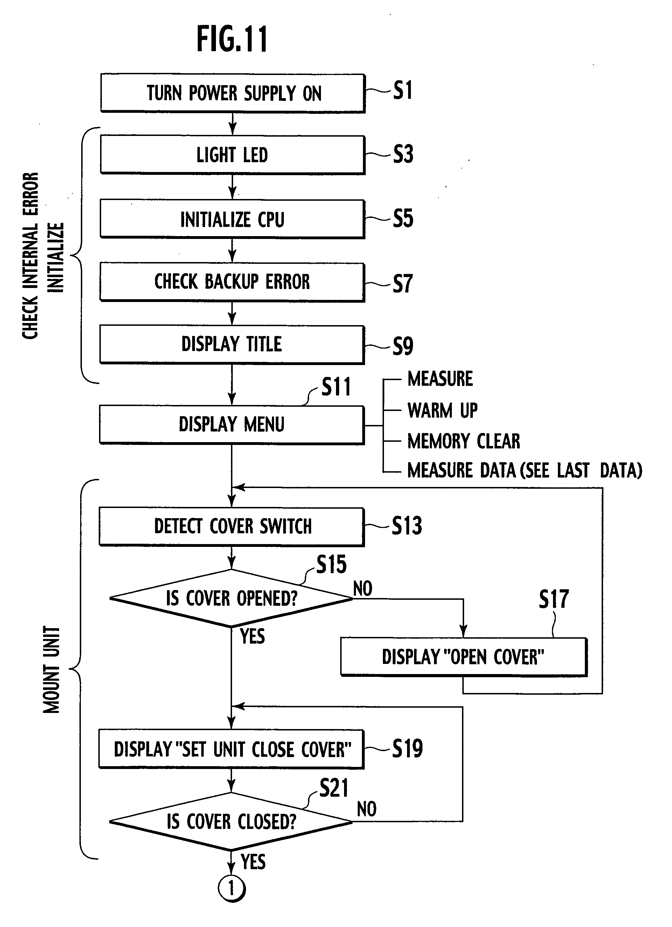

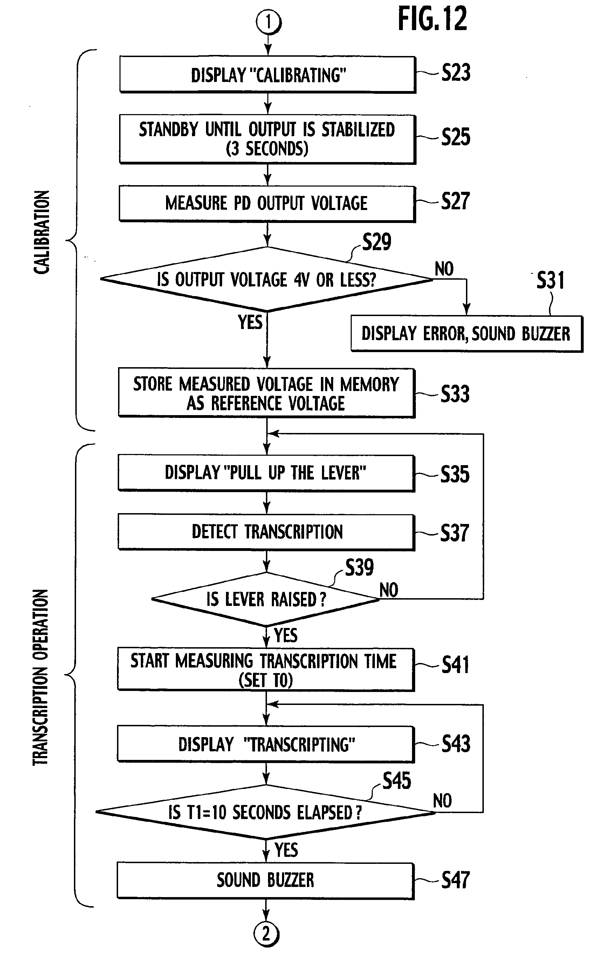

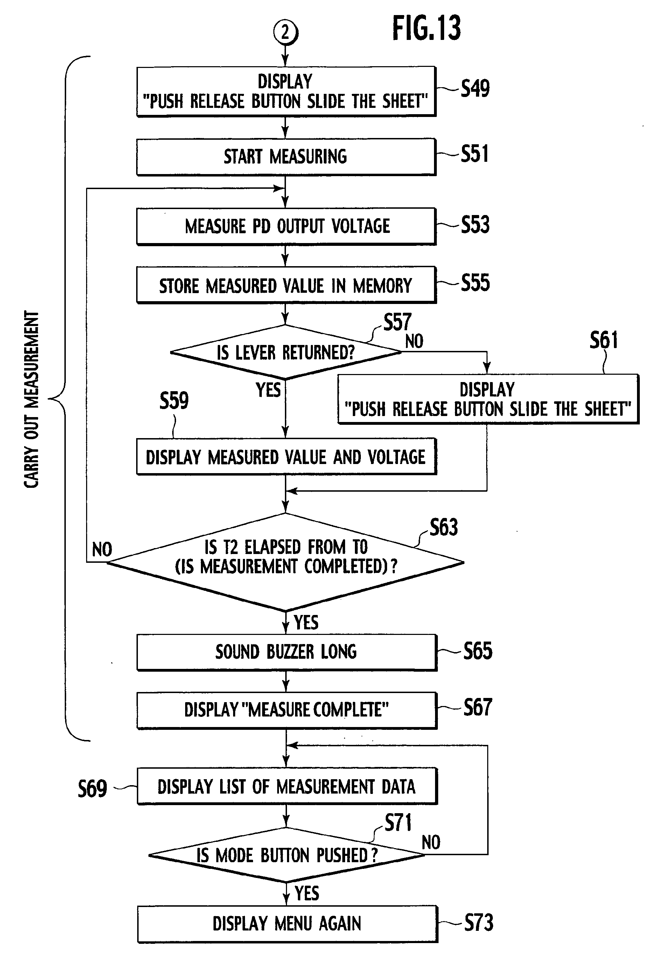

Figs. 11 to 13 show the operation for measuring the amylase activity using the enzyme activity measuring apparatus 1.

First, in step S1, a user turns on the power supply switch of the enzyme activity measuring apparatus 1.

If the power supply switch is turned on, in step S3, the LED 21 provided on the substrate 47 is lit. In step S5, the CPU 101 is initialized. In step S7, error of backed up data is checked.

In step S9, a title is displayed on the LCD panel 117A, and in step S11, the operation menu is displayed.

Next, in step S13, the operation state of the cover switch is detected. In step S15, it is determined whether the cover 3 is opened. If it is detected that the cover 3 is closed (Yes in step S15), "OPEN COVER" is displayed on the LCD panel 117A, and the procedure is returned to step S13.

If it is detected that the cover 3 is opened (No in step S15), "SET UNIT COVER CLOSE" is displayed on the LCD panel 117A in step S19, and it is detected in step S21 whether the cover 3 is closed.

In reply to the display of "SET UNIT COVER CLOSE", the user inserts the base material 27 having the saliva extracting sheet 15 into the holder 17, and sets the holder 17 into which the base material 27 is inserted to a predetermined position of the base 29. Then, the user closes the cover 3 and fixes the cover 3 using the hook 45.

When the cover 3 is closed (Yes in step S21), "CALIBRATING" is displayed on the LCD panel 117A in steps S23 and S25, and the enzyme activity measuring apparatus 1 is brought into its standby state until the output is stabilized (for example, 3 seconds).

In step S27, the enzyme activity measuring apparatus 1 irradiates the white portion of the base material 27 (back side of a portion of the base material 27 where the saliva extracting sheet 15 is provided) with light from the LED 21, measures the output current value of the PD 23, and converts the current value to the voltage value.

When the voltage value is higher than 4V (No in step S29). "ERROR" is displayed on the LCD panel 117A in step S31, and buzzer sounds.

On the other hand, if the output voltage is less than 4V (Yes in step S29), the enzyme activity measuring apparatus 1 stores the measured voltage value in the storing unit 109 as reference voltage in step S33. In step S35, "PULL UP THE LEVER" is displayed on the LCD panel 117A.

Based on the display in step S 35, the user turns the transcription lever 41A (to the position shown with phantom line in Fig. 2). With this, the transcription of saliva is started.

In steps S37 and S39, the enzyme activity measuring apparatus 1 determines whether the transcription of saliva is started (and or whether the transcription of saliva is being carried out) by means of the limit switch operated by the projection 33C.

If the transcription lever 41A is not turned, i.e., if the start of transcription of saliva is not detected (No in step S39), the enzyme activity measuring apparatus 1 repeats the procedure from step S35.

On the other hand, if it is detected that the transcription of saliva is started (Yes in step S39), in step S41, the enzyme activity measuring apparatus 1 starts the measurement of the transcription time (set T0). In step S43, "TRANSCRIPTING" is displayed on the LCD panel 117A.

In step S45, the enzyme activity measuring apparatus 1 detects whether 10 seconds (T1) is elapsed after the start of transcription.

If 10 seconds are not elapsed from the start of transcription (No in step S45), the enzyme activity measuring apparatus 1 repeats the procedure from step S43.

On the other hand, if 10 seconds are elapsed from the start of transcription (Yes in step S45), the buzzer sounds in step S47. In step S49, "PUSH RELEASE BUTTON SLIDE THE SHEET" is displayed on the LCD panel 117A in step S49.

In response to the beep in step S47 or the display in step S49, the user turns the transcription lever 41A, and removes the base material 27 from the holder 17 (enzyme activity measuring apparatus 1) and completes the transcription of saliva.

In steps S51 and S53, the enzyme activity measuring apparatus 1 starts the measurement . That is, the enzyme activity measuring apparatus 1 allows the LED 21 to light, and irradiates the reagent containing member 13 with light and measures the reflection light by the PD 23.

In step S55, the enzyme activity measuring apparatus 1 stores data concerning the measured reflection light in the storing unit 109.

In step S57, the enzyme activity measuring apparatus 1 detects whether the transcription lever 41A has returned to the position shown with solid line in Fig. 2. If the transcription lever 41A has not yet returned to the position (No in step S57), "PUSH RELEASE BUTTON SLIDE THE SHEET" is displayed on the LCD panel 117A in step S61.

On the other hand, if it is detected that the transcription lever 41A has returned to the position shown with solid line in Fig. 2 (Yes in step S57), in step S59, the measured value (amylase activity) and the voltage value based on measurement by the PD 23 are displayed on the LCD panel 117A.

In step S63, the enzyme activity measuring apparatus 1 determines whether predetermined time (T2) is elapsed from the time (time T0) when the transcription of saliva is started.

If the predetermined time is not elapsed (No in step S63), the enzyme activity measuring apparatus 1 repeats the procedure from step S53.

If the predetermined time is elapsed (Yes in step S63), in step S65, the buzzer sounds and in step S67, "MEASURE COMPLETE" is displayed on the LCD panel 117A.

In step S69, a list of measurement data is displayed on the LCD panel 117A. The measurement data is data concerning the amylase activity, and is data concerning the voltage value measured in step S27 and density of reagent (depth of formed color) calculated based on the voltage value measured in step S53.

In step S71, the enzyme activity measuring apparatus 1 detects whether the MODE button (not shown) is pushed. If the MODE button is pushed, the operation menu is again displayed on the LCD panel 117A in step S73.

### (Working Effect)

According to the enzyme activity measuring apparatus 1 of the first embodiment of the present invention described above, it is possible to precisely transcribe the predetermined volume of saliva to the reagent containing member 13. Since the density of reagent (degree of formed color) in the reagent containing member 13 is measured when the predetermined time is elapsed after the saliva is transcribed, the amylase activity included in saliva can precisely be detected.

According to the enzyme activity measuring apparatus 1, the flat surface portion 13A of the reagent containing member 13 and the flat surface portion 15A of the saliva extracting sheet 15 are disposed such as to be opposed to each other in parallel to each other, and the flat surface portion 13A and the flat surface portion 15A are brought into contact with each other for the predetermined time under the predetermined pressure. Therefore, it is possible to substantially constantly determine the transcription volume of saliva to the reagent containing member 13.

According to the enzyme activity measuring apparatus 1, the reagent containing member 13 and the saliva extracting sheet 15 are separated from each other using the holder 17. Further, since the saliva is transcribed by deforming the holder 17 by a predetermined amount, the transcription operation of saliva, i.e., the measuring operation of the activity of the amylase is simplified.

Further, according to the enzyme activity measuring apparatus 1, since the density of reagent included in the reagent containing member 13 can be detected by measuring the depth of color of the reagent, the density of reagent can easily be measured.

According to the enzyme activity measuring apparatus 1, the cover 3 capable of opening and closing is provided for preventing the disturbance light from entering the color depth measuring unit 9. Therefore, when the cover 3 is opened, it is easy to set the reagent containing member 13 and the holder 17 to the enzyme activity measuring apparatus 1.

When the cover 3 is closed, the disturbance light can be blocked and the color of the reagent containing member 13 can precisely be detected. Since the cover 3 fixes the holder 17, the structure of the enzyme activity measuring apparatus 1 is simple.

According to the color depth measuring unit 9 of the enzyme activity measuring apparatus 1, the LED 21 irradiates the reagent containing member 13 with light uniformly, and the PD 23 receives the reflection light from diagonal direction with respect to the reagent containing member 13. Therefore, it is possible to receive the uniform and stable reflection light, and the color of the reagent containing member 13 can precisely be measured.

According to the color depth measuring unit 9 of the enzyme activity measuring apparatus 1, the PD 23 receives and measures the reflection light through the optical fiber 25. Thus, the layout of the PD 23 can flexibly be designed. The filter (not shown) provided on the tip end of the PD 23 can be separated from the reagent containing member 13, it is possible to prevent the filter which is vulnerable to water from being damaged.

According to the enzyme activity measuring apparatus 1, since the saliva is used as sample, sample can be extracted easily (a subject person does not feel pain for example) with compared with a case in which blood or urine is used as the sample.

Further, according to the enzyme activity measuring apparatus 1 capable of easily measuring the amylase activity included in human's saliva, it is possible to provide simple and effective means which detects the stress level of a subject person.

Concretely, a subject person (user) measures the amylase activity included in the saliva which is extracted in the rest state, and the measured activity is stored in the enzyme activity measuring apparatus 1 as a reference value.

Then, the subject person measures the amylase activity in a predetermined state (state in which the subject person receives stress), and compares the measured activity and the reference value. If the measured activity is greater than the reference value, it can be determined that the subject person receives distress, and if the measured activity is smaller than the reference value, it can be determined that the subject person receives eustress.

As the difference between the reference value and the measured activity is greater, it can be determined that the received stress is also greater, and the degree of stress that the subject person is mentally receiving can also be determined.

By continuously measuring the amylase activity, it is possible to grasp the variation of stress with time. When a user receives distress, the amylase activity included in saliva is increased. In this case, it is possible to determine the degree of distress by the magnitude of positive time gradient.

When the user receives eustress, since the amylase activity is reduced, it is possible to determine the degree of stress by the magnitude of positive time gradient.

By continuously measuring the amylase activity, it is possible to grasp the variation in amylase activity before and after a specific stress is applied to a subject person, and it is possible to determine the magnitude of stress by the time and magnitude required until the activity is returned to the previous activity (reference value) before the stress is applied.

### Second Embodiment

### (Outline structure of enzyme activity measuring apparatus)

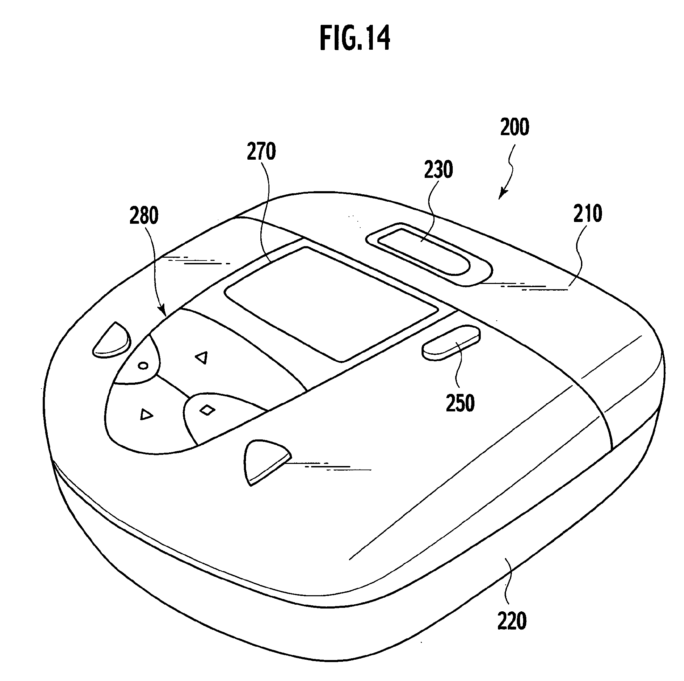

Next, a second embodiment of the enzyme activity measuring apparatus according to the present invention will be explained. Fig. 14 is a perspective view of an enzyme activity measuring apparatus 200 of the second embodiment of the invention. The enzyme activity measuring apparatus 200 is an improvement of the enzyme activity measuring apparatus 1 of the first embodiment of the invention.

A different portion of the enzyme activity measuring apparatus 200 as compared with the enzyme activity measuring apparatus 1 will mainly be explained, and explanation of the same structure and function as those of the enzyme activity measuring apparatus 1 will appropriately be omitted.

As shown in Fig. 14, the enzyme activity measuring apparatus 200 has a casing 220. The casing 220 is provided at its surface with a cover opening button 250, a LCD panel 270 and a switch 280. The enzyme activity measuring apparatus 200 is operated by connecting four AAA batteries or AC power supply incorporated therein.

The LCD panel 270 has the same function as that of the LCD panel 117A (see Fig. 2) of the enzyme activity measuring apparatus 1. The switch 280 is connected to the CPU 101 like the switch 119 (see Fig. 9) of the enzyme activity measuring apparatus 1.

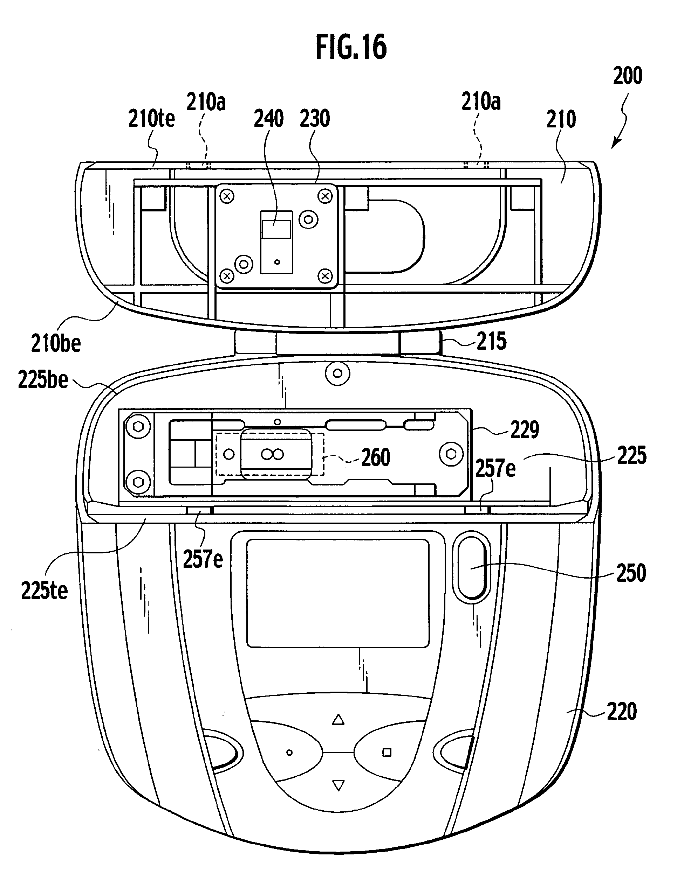

A cover 210 of the enzyme activity measuring apparatus 200 is provided with a sample transcription unit 230 which pushes the holder 17 (see Fig. 1) . The holder 17 can be set on a base 229 (not shown in Fig. 14, see Fig. 16) provided in the casing 220.

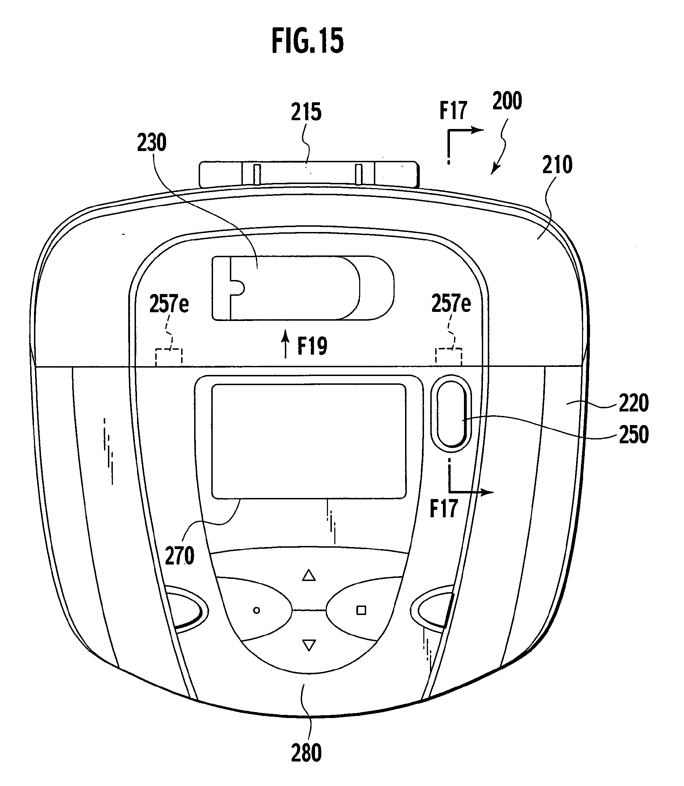

Fig. 15 is a plan view of the enzyme activity measuring apparatus 200. As shown in Fig. 15, the cover 210 can open and close around a hinge 215 (turning shaft). Fig. 16 shows the cover 210 which is turned and opened around the hinge 215.

As shown in Fig. 16, the sample transcription unit 230 of this embodiment is provided on the cover 210. The sample transcription unit 230 is provided with a metal transcription pad 240 (pushing member) which pushes the holder 17 set on the base 229. The base 229 constitutes the reagent/sample disposing unit of this embodiment. The base 229 has the same shape as that of the base 29 of the enzyme activity measuring apparatus 1. In this embodiment, a heater 260 is provided below the base 229. The heater 260 heats a sample held by the holder 17 set on the base 229 to a predetermined temperature (for example, 20°C) .

The enzyme activity measuring apparatus 200 (casing 220) is provided with a pair of hooks 257 (ends 257e). The cover 210 is provided with a pair of insertion holes 210a into which the hooks 257 are inserted in a state in which the cover 210 is closed.

The hooks 257 are biased in the insertion direction into the insertion holes 210a. If the cover opening button 250 is pushed, the hooks 257 are pulled in toward the inside of the casing 220. That is, the cover 210 is fixed in its closed state by the hooks 257.

If the cover 210 is closed, an upper end 210te of the cover 210 abuts against an upper end 225te of an inner cover 225. Similarly, a lower end 210be of the cover 210 abuts against a lower end 225be of the inner cover 225.

### (Cover opening/closing mechanism)

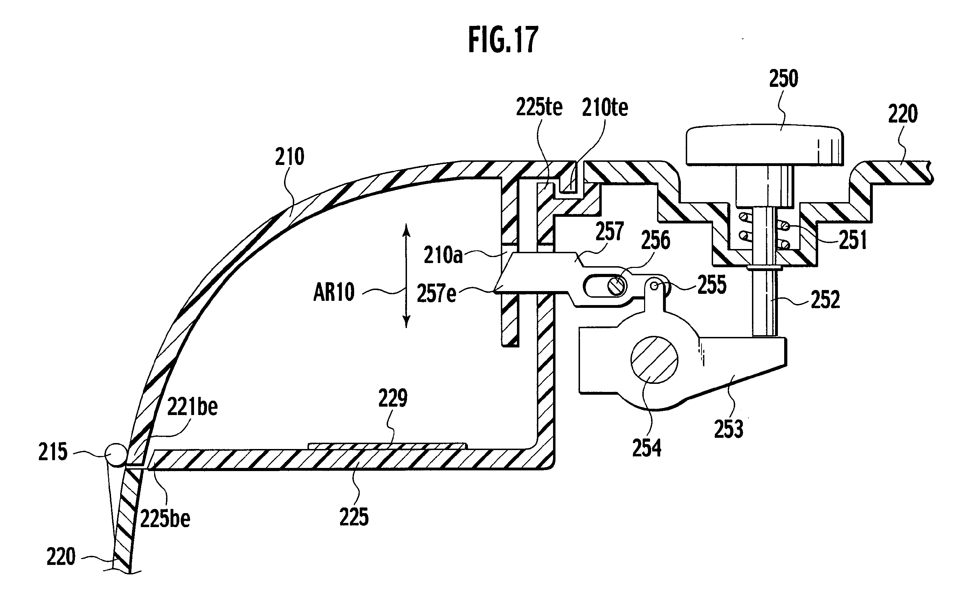

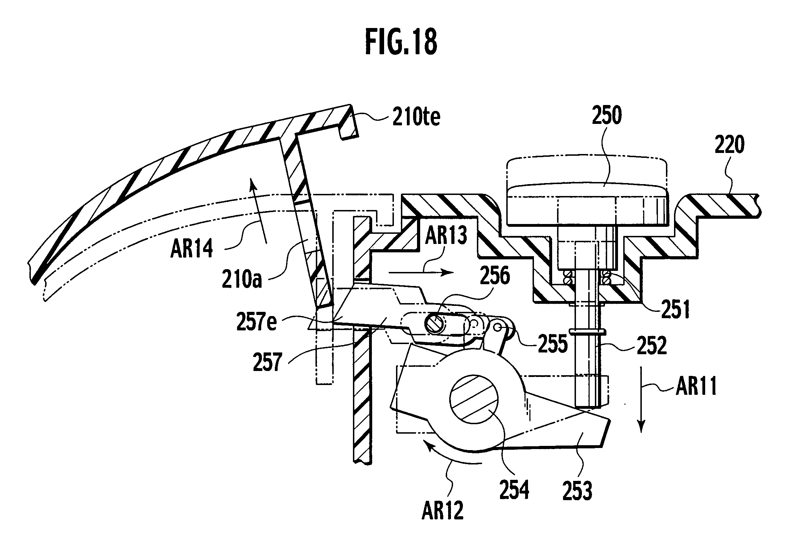

Next, referring to Figs. 17 and 18, a cover opening/closing mechanism of the enzyme activity measuring apparatus 200 will be explained. Fig. 17 is a sectional view taken along the direction F17-F17 shown in Fig. 15. Fig. 18 is an explanatory view for explaining the operation of the cover opening/closing mechanism.

As shown in the drawings, the casing 220 is provided with a cover opening button 250, a coil spring 251, a push rod 252, a lever 253, a turning shaft 254, a connecting pin 255, a support shaft 256, and hooks 257.

The cover opening button 250 is pushed when the cover 210 is to be opened. That is, when the holder 17 into which the saliva extracting sheet 15 is inserted is to be set on the base 229 or when the measured holder 17 is to be removed from the base 229, the cover opening button 250 is pushed.

The cover opening button 250 is connected to the push rod 252 inserted into the coil spring 251. If the cover opening button 250 is pushed, the lever 253 is pushed to turn the lever 253. In this embodiment, the cover opening button 250 and the push rod 252 constitute the cover opening button portion.

As shown in these drawings, the upper end 210te of the cover 210 is a convex end, and the upper end 225te of the inner cover 225 is concave end. That is, the convex upper end 210te is fitted into the concave upper end 225te.

The lower end 225be of the inner cover 225 is slightly swells as compared with the casing 220, and the lower end 225be abuts against the lower end 210be of the cover 210.

The lever 253 is engaged with the hook 257, and turns around the turning shaft 254. The lever 253 moves the hook 257 in the insertion direction of the insertion hole 210a and in a direction opposite from the insertion direction. In this embodiment, the lever 253 constitutes the projecting member moving lever.

The connecting pin 255 connecting the lever 253 and the hooks 257 to each other is inserted into an upper edge of the lever 253. The lever 253 biases the hooks 257 in the insertion direction of the insertion hole 210a by a spring provided in the lever 253. In this embodiment, the turning shaft 254, the support shaft 256 and the hooks 257 are made of metal to secure the strength.

The hooks 257 are supported by the support shaft 256, and in a state in which the cover 210 is closed, the sample transcription unit 230 can move in a direction substantially perpendicular to the direction AR10 (pushing direction) in which the sample transcription unit 230 pushes the holder 17.

More concretely, as shown in Fig. 18, if the cover opening button 250 is pushed down in the direction AR11, the lever 253 turns around the turning shaft 254 in the direction AR12. The hooks 257 connected to the lever 253 through the connecting pin 255 are moved in the direction AR13 (opposite from the insertion direction of the insertion hole 210a).

If the hooks 257 are moved in the direction AR13, the ends 257e of the hooks 257 are pulled out from the insertion hole 210a. If the hooks 257 are pulled out from the insertion hole 210a, the cover 210 turns in the direction AR14 by the spring provided in the hinge 215.

### (Sample transcription unit)

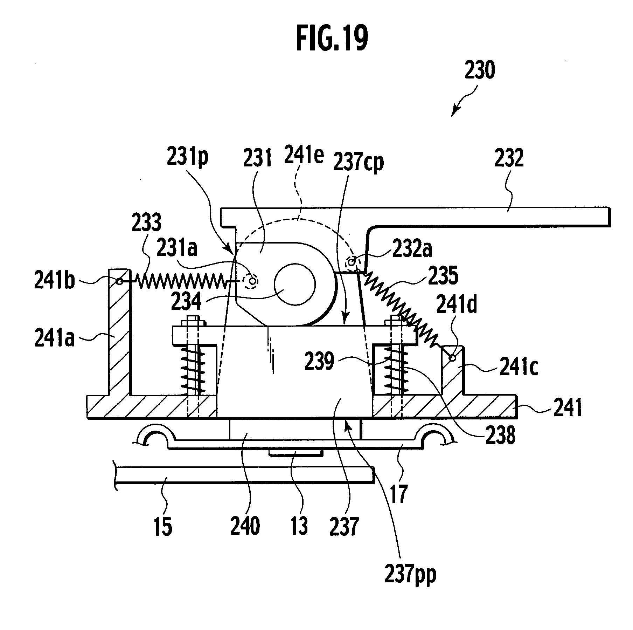

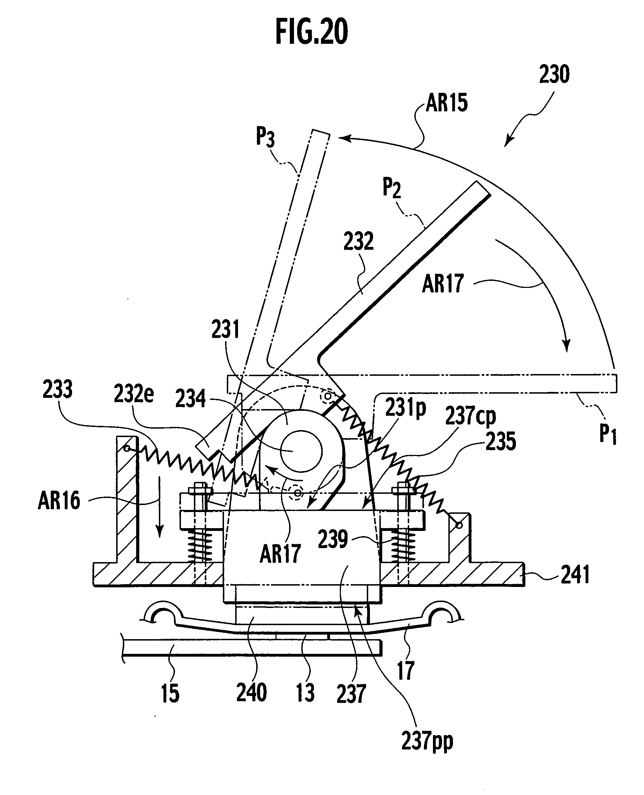

Next, referring to Figs. 19 and 20, the sample transcription unit 230 of the enzyme activity measuring apparatus 200 will be explained. Fig. 19 is a side view of the sample transcription unit 230 as viewed from the direction F19 shown in Fig. 15, and Fig. 20 is an explanatory view for explaining the operation of the sample transcription unit 230.

As shown in the drawings, the sample transcription unit 230 includes a cam 231, a transcription lever 232, a movable member 237, a transcription pad 240 and a base plate 241. The sample transcription unit 230 is assembled as a unit, and the assembled sample transcription unit 230 is mounted on the cover 210 using a screw.

The movable member 237 includes a pushing surface 237pp and a cam abutment surface 237cp. The pushing surface 237pp is connected to the transcription pad 240 which pushes the holder 17. The holder 17 holds the reagent containing member 13 and the saliva extracting sheet 15. The cam abutment surface 237cp is opposed to the pushing surface 237pp. The movable member 237 can move along the pushing direction into which the holder 17 is pushed.

The cam 231 turns around a turning shaft 234. The cam 231 has a flat surface portion 231p on a portion of the outer peripheral surface thereof having a distance from the turning shaft 234 which is longer than other portion.

As shown in Fig. 20, the transcription lever 232 turns in the direction AR15 (first direction), thereby bringing the flat surface portion 231p of the cam 231 and the cam abutment surface 237cp of the movable member 237 into abutment against each other.

More concretely, like the cam 231, the transcription lever 232 can turn around the turning shaft 234. If the transcription lever 232 turns in the direction AR15, the cam 231 which is adjacent to the transcription lever 232 turns around the turning shaft 234, and the flat surface portion 231p abuts against the cam abutment surface 237cp of the movable member 237.

A guide rod 238 is mounted on the base plate 241 so that the movable member 237 can move. The guide rod 238 is inserted into a coil spring 239 (second biasing member) which biases the movable member 237 toward the cam 231.

The base plate 241 includes a retaining projection 241a, a retaining projection 241c and a turning shaft support portion 241e.

The retaining projection 241a is provided with a retaining hole 241b. A coil spring 233 (first biasing member) for biasing the cam 231 such as to turn the cam 231 in the direction AR17 (second direction) which is opposite from the direction AR15 (first direction) is mounted to the retaining hole 241b and a retaining hole 231a provided in the cam 231.

The retaining projection 241c is provided with a retaining hole 241d. A coil spring 235 (third biasing member) for biasing the transcription lever 232 such that the transcription lever 232 turns in the direction AR17 is mounted to the retaining hole 241d and a retaining hole 232a provided in the transcription lever 232.

The turning shaft support portion 241e supports the both ends of the turning shaft 234 such that the turning shaft 234 can turn.

Next, referring to Fig. 20, the operation of the sample transcription unit 230 will be explained. If the user turns the transcription lever 232 in the direction AR15, the cam 231 turns around the turning shaft 234, and the flat surface portion 231p abuts against the cam abutment surface 237cp.

Since the flat surface portion 231p is provided on the outer peripheral surface having the longer distance from the turning shaft 234 than other portions, the movable member 237 is moved downward.

If the movable member 237 is moved downward, the transcription pad 240 which is connected to the pushing surface 237pp of the movable member 237 pushes the holder 17 to deform the same. If the holder 17 is deformed, the reagent containing member 13 (flat surface portion 13A) and the saliva extracting sheet 15 (flat surface portion 15A) held by the holder 17 come into contact with each other, and the transcription of saliva included in the saliva extracting sheet 15 is started.

Here, a load is applied to the movable member 237 (and transcription pad 240) in the direction of the cam 231 by reaction forces of the pushed and deformed holder 17 and the coil spring 239 . Thus, the flat surface portion 231p and the pushing surface 237pp are held in their abutted state, and the contact state between the reagent containing member 13 and the saliva extracting sheet 15, i.e. , the transcription state of saliva" is held.

That is, the transcription lever 232 is held at the position P₂. The transcription lever 232 can freely turn between a position P₁ and a position P₃ where the end 232e of the transcription lever 232 come into contact with the movable member 237.

The "transcription state of saliva" is released if the user lightly pushes the transcription lever 232 located at the position P₂ downward (direction P₁). More specifically, the transcription lever 232 is biased by the coil spring 235 such that the transcription lever 232 turns in the direction AR17. The cam 231 is biased such as to turn in the AR17 by the coil spring 233.

Thus, if the transcription lever 232 is lightly pushed, the transcription lever 232 and the cam 231 are turned in the direction AR17, and the "transcription state of saliva" is released.

When the cover 210 (see Fig. 16) is not closed, the movable member 237 (and transcription pad 240) can not obtain the reaction force from the holder 17. The cam 231 is biased by the coil spring 233 such as to turn in the direction AR17. That is, the sample transcription unit 230 is constituted such that when the cover 210 is not closed, the flat surface portion 231p and the pushing surface 237pp are prevented from being held in a state in which they abut against each other.

### (Sample temperature compensating mechanism)

Next, a sample temperature compensating mechanism of the enzyme activity measuring apparatus 200 will be explained. The enzyme activity measuring apparatus 200 has substantially the same CPU substrate 100 and sensor substrate 121 (see Figs. 9 and 10) as those of the enzyme activity measuring apparatus 1 of the first embodiment.

The sample temperature compensating mechanism of the enzyme activity measuring apparatus 200 has (1) a function for correcting activity of detected amylase, and (2) a function for keeping sample warm.

### (1) Correction of amylase activity

The temperature detector 129 of the enzyme activity measuring apparatus 200 (see Fig. 10) detects the temperature of sample which is the temperature of the reagent containing member 13 to which the sample, i.e., the saliva is transcribed.

More specifically, a photodiode 26 (PD 26, hereinafter) for detecting infrared rays is connected to the temperature detector 129.

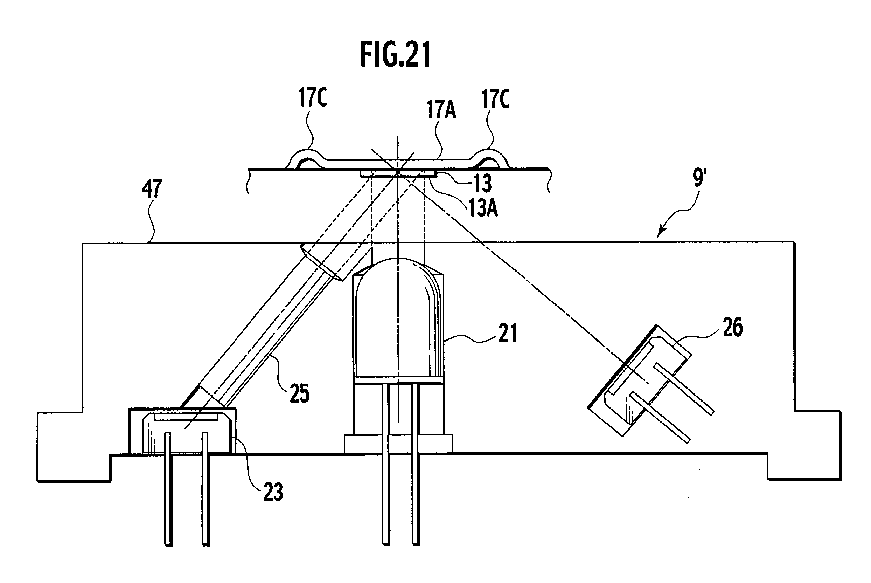

Fig. 21 is a schematic block diagram of a color depth measuring unit 9' provided on the enzyme activity measuring apparatus 200. The color depth measuring unit 9' comprises the color depth measuring unit 9 (Fig. 5) of the enzyme activity measuring apparatus 1 to which the PD 26 is added.

The PD 26 detects the intensity of the infrared rays emitted from the reagent containing member 13. The temperature detector 129 connected to the PD 26 detects the temperature of the sample by calculating the temperature emitted from the reagent containing member 13 based on the intensity of the detected infrared rays.

The storing unit 109 (see Fig. 9) of the enzyme activity measuring apparatus 200 also can store sample temperature correcting data in which the sample temperature detected by the temperature detector 129 and a correcting rate for correcting the amylase activity detected by the CPU substrate 100 are associated with each other. In this embodiment, the storing unit 109 constitutes a sample temperature correcting data storing unit.

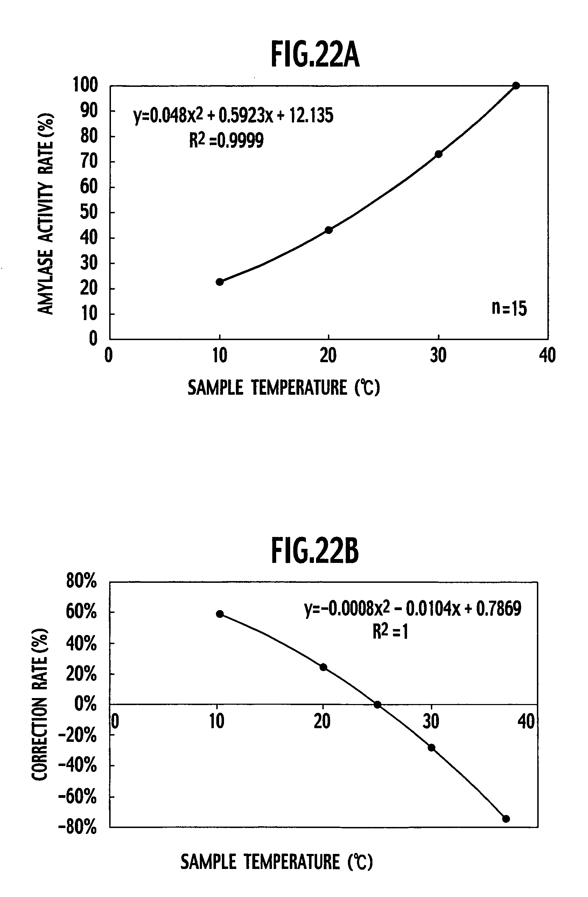

Fig. 22A is a graph showing the relation (temperature characteristics) between the sample temperature and the activity rate of the amylase included in the sample. In Fig. 22A, the the amylase activity at 37°C (human's body temperature) is indicated with 100%.

As shown in Fig. 22A, if the sample temperature is lowered to 10°C for example, the amylase activity is reduced (actually measured value) by about 20% of the amylase activity at 37°C. That is, the activity of amylase included in sample (saliva) largely relies upon the temperature.

That is, an error in measurement becomes greater depending upon the temperature at the time of measurement. Therefore, in this embodiment, sample temperature correcting data shown in Fig. 22B is used.

Fig. 22B shows a correcting curve of sample temperature determined based on the temperature characteristics. The correcting curve is determined as being 25°C as a reference because a general room temperature and the calibration curve are set to 25°C. The reference temperature may be other than 25°C.

The CPU 101 (see Fig. 9) of the enzyme activity measuring apparatus 200 can correct the activity of the detected amylase based on the sample temperature detected by the temperature detector 129 and the sample temperature correcting data stored in the storing unit 109. In this embodiment, the CPU 101 constitutes an activity correcting unit.

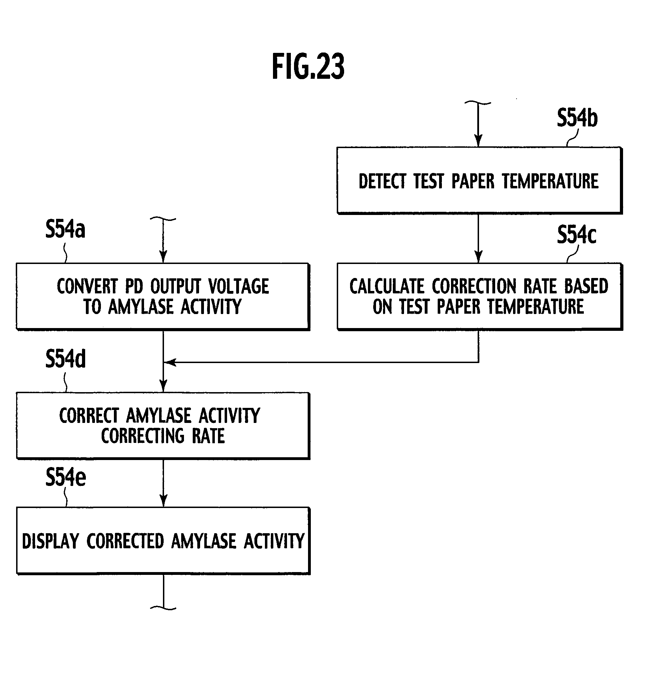

More specifically, activity of detected amylase is corrected by processing flow shown in Fig. 23. Fig. 23 is a flowchart of operation to be carried out between steps S53 and S55 in the operation flow of the enzyme activity measuring apparatus 1.

As shown in Fig. 23, in step S54a, the enzyme activity measuring apparatus 200 converts, into amylase activity, a value of output voltage which is a voltage value from which a current value output by the PD 23 is converted. As described, the PD 23 measures light reflected from the reagent containing member 13.

In step S54b, the enzyme activity measuring apparatus 200 detects the temperature (sample temperature) of the reagent containing member 13 to which the saliva is transcribed. More specifically, the enzyme activity measuring apparatus 200 detects the intensity of infrared rays emitted from the reagent containing member 13 (test paper) by the PD 26.

In step S54c, the enzyme activity measuring apparatus 200 calculates a correcting rate of amylase activity based on the sample temperature detected in step S54b and the stored sample temperature correcting data (see Fig. 22B).

The procedure in steps S54b and S54c can be carried out concurrently with the procedure in step S54a, or before the procedure in step S54a.

In step S54d, the enzyme activity measuring apparatus 200 corrects the amylase activity converted in step S54a using the correcting rate calculated in step S54c.

In step S54e, the enzyme activity measuring apparatus 200 displays the activity of the corrected amylase on the LCD panel 270.

### (2) Keeping of temperature of sample

By correcting the amylase activity, an error in the measurement caused by the temperature at the time of measurement can be suppressed. However, when the temperature at the time of measurement is low (lower than 10°C), the activity of amylase is largely lowered as shown in Fig. 22A.

If the activity of amylase is largely lowered, although amylase is included, reagent included in the reagent containing member 13 does not react in some cases. In this case, the above-described correction can not be used.

Thus, the enzyme activity measuring apparatus 200 is provided with a heater 260 which heats the sample (saliva) set in the base 229 to a predetermined temperature (for example, 20°C).

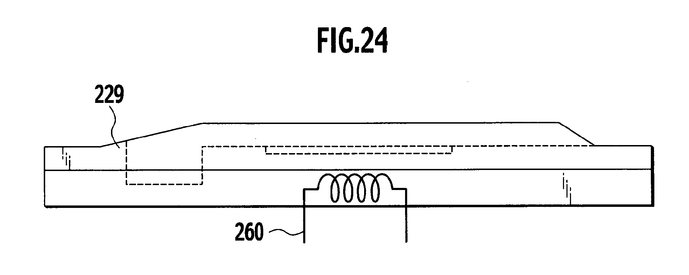

More specifically, as shown in Fig. 24, the heater 260 comprising a heating wire is provided below the base 229. In order to efficiently transfer the heat generated by the heater 260 to the reagent containing member 13, the base 229 is made of aluminum alloy having excellent thermal conductivity.

When the CPU 101 (see Figs. 9 and 10) of the enzyme activity measuring apparatus 200 detects that the sample temperature reaches the predetermined temperature, the CPU 101 can stop the operation of the heater 260. In this embodiment, the CPU 101 constitutes a heater controller.

Since the enzyme activity measuring apparatus 200 has the heater 260, the power consumption of the enzyme activity measuring apparatus 200 is increased. Thus, a separate battery pack can be connected to the enzyme activity measuring apparatus 200.

### (Working effect)

According to the cover opening/closing mechanism provided in the enzyme activity measuring apparatus 200, the hooks 257 are constituted such that the sample transcription unit 230 can move in the direction substantially perpendicular to the direction AR10 (pushing direction) in which the sample transcription unit 230 pushes the holder 17.

Thus, even when a load caused when the holder 17 is pushed is applied to the hooks 257, it is possible to prevent the hooks 257 from coming out from the cover 210 (insertion hole 210a) and prevent the cover 210 from opening.

That is, according to the enzyme activity measuring apparatus 1, since the pushing direction in which the holder 17 is pushed and the direction in which the load is applied to the hook 45 are the same, if the transcription lever 41A is turned to push the holder 17, the hook 45 comes out and the cover 3 is opened in some cases. According to the enzyme activity measuring apparatus 200, it is possible to reliably prevent the cover 210 from opening when the holder 17 is pushed.

According to the cover opening/closing mechanism, since the cover opening button 250 is provided, the user can easily open the cover 210 only by pushing the cover opening button 250.

According to the cover opening/closing mechanism, since the disturbance light is prevented from entering by the shapes of the cover 210 (upper end 210te, the lower end 210be) and the inner cover 225 (upper end 225te, the lower end 225be), the change in color of the reagent containing member 13 can precisely be measured.

According to the sample transcription unit 230 provided in the enzyme activity measuring apparatus 200, even if the transcription lever 232 is turned, the cam 231 and the transcription pad 240 (and movable member 237) are pulled back to the position before the transcription lever 232 is turned as long as the holder 17 is not set on the base 229 and the cover 210 is not closed.

Therefore, as the holder 17 is not set on the base 229 and the cover 210 is not closed (as long as the cover 210 is not opened), it is possible to prevent the holder 17 from being pushed and from the transcription of saliva from being started.

That is, according to the enzyme activity measuring apparatus 1, the transcription lever 41A can be turned to push the holder 17 even if the cover 3 is not closed, the transcription of saliva is started at unintentional timing in some cases. According to the enzyme activity measuring apparatus 200, it is possible to reliably prevent the transcription of saliva from being started at unintentional timing.

The sample transcription unit 230 is assembled as a unit and the assembled sample transcription unit 230 is mounted on the cover 210 using a screw, the sample transcription unit 230 can be assembled and the cover 210 can be mounted efficiently as compared with the enzyme activity measuring apparatus 1 in which various members are individually mounted on the cover 3.

According to the sample transcription unit 230, the user can turn the transcription lever 232 and the cam 231 in the direction AR17 only by lightly pushing the transcription lever 232, and the "transcription state of saliva" is released. Thus, the returning operation of the transcription lever 232 is extremely simple.

According to the sample temperature compensating mechanism provided in the enzyme activity measuring apparatus 200, since the activity of the detected amylase is corrected by the sample temperature correcting data, it is possible to obtain an activity having small measurement error irrespective of the temperature at the time of measurement.

According to the sample temperature compensating mechanism, since the heater 260 is provided, the enzyme activity measuring apparatus 200 can be utilized in various situations irrespective of measuring environment (for example, outdoor).

Although the contents of the present invention have been disclosed based on the first and second embodiments, it should not be understood that the description and drawings forming a portion of the disclosure limit the present invention. Various modifications will be apparent for a person skilled in the art from this disclosure.

For example, the sample transcription unit 7 and the sample transcription unit 230 can be provided as a single sample transcription apparatus. The color depth measuring unit 9 and the color depth measuring unit 9' can be provided as a single color measuring apparatus.

The present invention includes various modes of carrying out the invention which are not described here of course. Therefore, the technical scope of the present invention is determined only by the invention specifying matters according to patent claims from the above explanation.

## Claims

1. An enzyme activity measuring apparatus comprising
a reagent/sample disposing unit configured to dispose a sample and a reagent containing member including an enzyme activity measuring reagent which measures an activity of an enzyme at a distance from each other,
a sample transcription unit configured to bring the sample and the reagent containing member disposed by the reagent/sample disposing unit into contact with each other, and to transcribe a predetermined volume of the sample to the reagent containing member,
a color depth measuring unit configured to measure a color depth of reagent included in the reagent containing member when predetermined time is elapsed after the sample is transcribed, and
an enzyme activity detector configured to detect the activity of enzyme included in the sample based on the color depth measured by the color depth measuring unit.

2. The enzyme activity measuring apparatus according to claim 1, wherein the reagent containing member is a sheet member,
the sample is included in a sample containing member which is a sheet member,
the reagent/sample disposing unit disposes a reagent containing member flat surface which is a flat surface portion of the reagent containing member and a sample containing member flat surface which is a flat surface portion of the sample containing member such that these flat surfaces are opposed to each other in substantially parallel to each other,
the sample transcription unit brings the reagent containing member flat surface and the sample containing member flat surface into contact with each other for predetermined time under predetermined pressure.

3. The enzyme activity measuring apparatus according to claim 2 , wherein the reagent/sample disposing unit disposes the reagent containing member and the sample containing member at a distance from each other using a holder which holds the reagent containing member and the sample containing member,
the sample transcription unit pushes the holder to bring the reagent containing member flat surface and the sample containing member flat surface into contact with each other.

4. The enzyme activity measuring apparatus according to claim 3, further comprising a cover which covers the color depth measuring unit and which opens and closes around a turning shaft, wherein
the sample transcription unit is provided on the cover.

5. The enzyme activity measuring apparatus according to claim 4, further comprising a projecting member which moves in a direction substantially perpendicular to a pushing direction in which the sample transcription unit pushes the holder, wherein
the cover is provided with an insertion hole into which the projecting member is inserted in a state in which the cover is closed.

6. The enzyme activity measuring apparatus according to claim 5, wherein
the projecting member is biased in an insertion direction into the insertion hole,
the enzyme activity measuring apparatus further comprises a projecting member moving lever which is engaged with the projecting member and which moves the projecting member in a direction opposite from the insertion direction by turning the projecting member moving lever around the turning shaft, and
a cover opening button portion which pushes the projecting member moving lever and which turns the projecting member moving lever when the cover opening button portion is pushed down.

7. The enzyme activity measuring apparatus according to claim 4, wherein
the sample transcription unit comprises
a movable member which has a pushing surface for pushing the holder and a cam abutment surface which is opposed to the pushing surface, and which can move around the pushing direction in which the holder is pushed,
a cam having a flat surface portion on a portion of its outer peripheral surface in which a distance from the turning shaft to the outer peripheral surface is longer than that of other portion,
a transcription lever which brings the flat surface portion into abutment against the cam abutment surface by turning the transcription lever into a first direction,
a first biasing member configured to bias the cam such as to turn the cam in a second direction which is opposite from the first direction, and
a second biasing member configured to bias the movable member toward the cam.

8. The enzyme activity measuring apparatus according to claim 7, further comprising a third biasing member configured to bias the transcription lever such as to turn the transcription lever in the second direction.

9. The enzyme activity measuring apparatus according to claim 1, further comprising
a temperature detector configured to detect a sample temperature which is a temperature of the sample,
a sample temperature correcting data storing unit configured to store sample temperature correcting data in which the sample temperature and correcting rate for correcting the activity detected by the enzyme activity detector are associated with each other, and
an activity correcting unit configured to correct the activity based on the sample temperature and the sample temperature correcting data.

10. The enzyme activity measuring apparatus according to claim 9, further comprising
a heater configured to heat the sample to predetermined temperature, and
a heater controller configured to stop the operation of the heater when the temperature detector detects that the sample temperature reaches the predetermined temperature.

11. The enzyme activity measuring apparatus according to claim 1, wherein
the color depth measuring unit irradiates the reagent containing member flat surface with light substantially at right angles, the color depth is measured by measuring light reflected from the reagent containing member flat surface from a direction which is diagonal with respect to the reagent containing member flat surface.

12. The enzyme activity measuring apparatus according to claim 11, wherein the color depth measuring unit measures the ref lected intensity of light by receiving the same through optical fiber.

13. The enzyme activity measuring apparatus according to claim 1, wherein
the enzyme is amylase, and
the sample is saliva.

14. An enzyme activity measuring method comprising
a reagent/sample disposing step for disposing a sample and a reagent containing member including an enzyme activity measuring reagent which measures an activity of an enzyme at a distance from each other,
a sample transcription step for bringing the sample and the reagent containing member disposed in the reagent/sample disposing step into contact with each other, and for transcribing a predetermined volume of the sample to the reagent containing member,
a color depth measuring step for measuring a color depth of reagent included in the reagent containing member when predetermined time is elapsed after the sample is transcribed, and
an enzyme activity detecting step for detecting the activity of enzyme included in the sample based on the color depth measured in the color depth measuring step, wherein
in the reagent/sample disposing step, a reagent containing member flat surface which is a flat surface portion of the reagent containing member and a sample containing member flat surface which is a flat surface portion of the sample containing member are disposed such that these flat surfaces are opposed to each other in substantially parallel to each other,
in the sample transcription step, the reagent containing member flat surface and the sample containing member flat surface are brought into contact with each other for predetermined time under predetermined pressure.

15. A sample transcription apparatus comprising
a reagent/sample disposing unit configured to dispose a sheet reagent containing member including enzyme activity measuring reagent which measures activity of enzyme and a sheet sample containing member including sample at a distance from each other, and
a sample transcription unit which bring the reagent containing member and the sample disposed by the reagent/sample disposing unit and which transcribes a predetermined volume of sample to the reagent containing member, wherein
the reagent/sample disposing unit disposes a reagent containing member flat surface which is a flat surface portion of the reagent containing member and a sample containing member flat surface which is a flat surface portion of the sample containing member such that these flat surfaces are opposed to each other in substantially parallel to each other,
the sample transcription unit brings the reagent containing member flat surface and the sample containing member flat surface into contact with each other for predetermined time under predetermined pressure.

16. A color measuring apparatus comprising a color depth measuring unit which irradiates a reagent containing member flat surface which is a flat surface portion of a sheet reagent containing member including an enzyme activity measuring reagent which measures activity of enzyme with light substantially at right angles, and which measures the light reflected from the reagent containing member flat surface from a direction which is diagonal with respect to the reagent containing member flat surface, thereby measuring the depth of color of the reagent containing member.

17. The color measuring apparatus according to claim 16, wherein the color depth measuring unit measures the reflected intensity of light by receiving the same through optical fiber.
